# EUROPEAN PATENT SPECIFICATION

(11) **EP 0 451 807 B1**
(45) Date of publication and mention of the grant of the patent: **24.07.1996**
(21) Application number: 91105669.5
(22) Date of filing: 10.04.1991
(51) Int. Cl.: C08K 5/51, C08L 101/00, C08K 5/3492

(54) **Self-extinguishing polymeric compositions**
Selbstlöschende polymerische Zusammensetzungen
Compositions polymériques auto-extinctrices

(30) Priority: 11.04.1990 IT 2000890
(43) Date of publication of application: 16.10.1991
(73) Proprietor: MINISTERO DELL' UNIVERSITA' E DELLA RICERCA SCIENTIFICA E TECNOLOGICA, I-00196 Roma (IT)
(72) Inventor: Cipolli, Roberto, I-28100 Novara (IT); Oriani, Roberto, I-20137 Milan (IT); Nucida, Gilberto, I-20098 San Giuliano Milanese, Milan (IT); Pirozzi, Mario, I-20097 San Donato Milanese, Milan (IT); Masarati, Enrico, I-29010 Castelnuovo Valtidone, Piacenza (IT)
(74) Representative: Weinhold, Peter, Dr.

(56) References cited:
- EP-A- 0 196 135
- EP-A- 0 286 478

## Description

The present invention relates to self-extinguishing compositions based on thermoplastic polymers and/or polymers endowed with elastomeric properties, in particular olefinic polymers or copolymers, which compositions contain specific triazine derivatives, optionally in combination with (preferably minor) amounts of ammonium and/or amine phosphates.

Several methods of reducing or eliminating the combustibility of polymers are known in the art. Some of said methods are based on the use of metal compounds, in particular on antimony, bismuth or arsenic, in combination with partially halogenated, thermally unstable organic compounds, such as chlorinated paraffin waxes.

Other methods are based on the use of substances capable of yielding intumescence. The formulations of the intumescent type generally are composed of the polymer and at least three main additives, i.e., an essentially phosphorus-containing additive, whose purpose is to form, during the combustion, an impermeable, semi-solid and vitreous layer essentially composed of polyphosphoric acid and to activate the process of formation of intumescence; a second additive, containing nitrogen, which is to serve as foaming agent; and a third, carbon-containing additive, which acts as a carbon donor in order to allow an insulating cellular carbonaceous layer ("char") to be formed between the polymer and the flame.

Examples of intumescent formulations of said type may be found in US-A-3,810,862 (Phillips Petroleum Co.; based on melamine, pentaerythritol and ammonium polyphosphate); US-A-4,727,102 (Vamp S.r.l.; based on melamine cyanurate, a hydroxyalkyl derivate of isocyanuric acid and ammonium polyphosphate); and WO-85/05626 (Plascoat U.K. Limited; on the basis of various phosphorus and nitrogen compounds among which, in particular, a combination of melamine phosphate, pentaerythritol and ammonium polyphosphate may be mentioned).

In more recent formulations, together with an organic or inorganic phosphorus compound, a nitrogen-containing organic compound was used, generally consisting of an aminoplastic resin obtained by means of condensation of urea, melamine or dicyandiamide with formaldehyde.

Examples of formulations containing two additives are those described in US-A-4,504,610 (Montedison S.p.A.; based on oligomeric derivates of 1,3,5-triazine and ammonium polyphosphate) and EP-A-14,463 (Montedison S.p.A.; based on organic compounds selected from benzylguanamine and reaction products of aldehydes and several cyclic nitrogen compounds, in particular benzylguanamine-formaldehyde copolymers, and ammonium polyphosphate).

Self-extinguishing compositions can also be obtained by using single-component additives, which contain in their organic molecule both nitrogen and phosphorus atoms, as disclosed in US-A-4,201,705 (Borg-Wagner Corp.).

EP-A-196 135 and 286 478 disclose self-extinguishing polymeric compositions comprising 2,4,6-triamino-1,3,5-triazine (melamine) or derivatives thereof which are salified with an oxygenated acid of phosphorus.

These intumescent flame retardant systems endow the polymers to which they are added with the property of forming a carbonaceous residue when they burn or are exposed to a flame. This kind of flame-retardant system offers numerous advantages, i.e., absence of corrosion phenomena in the machinery in which the polymers are processed, a lower emission of smokes as compared to systems containing metal compounds and halogenated hydrocarbons, and, above all, the possibility of endowing the polymers with satisfactory flame-proof properties with a smaller amount of total additive and therefore without excessively impairing the mechanical properties thereof.

It has now surprisingly been found that it is possible to confer satisfactory antiflame properties to the above polymers by using mono-component additives, resulting in polymeric compositions free of ammonium phosphate or amine phosphate, or to impart very good antiflame properties to said polymers by using together with the above additives a quantity of ammonium phosphate and/or amine phosphate which is much lower than that used in the prior art.

Furthermore it has been found that it is possible to obtain said very good results by using phosphorus-nitrogen-compounds having a very simple structure, i.e., based on derivatives of 2,4,6-triamino-1,3,5-triazine salified with an acid containing phosphorus. Said salts also show a good heat stability and therefore retain a high activity as flame-retardants also when the polymeric compositions containing them are heat-processed.

The use of the above mentioned (not salified) derivatives of 2,4,6-triamino-1,3,5-triazine of general formula (I) given below in combination with ammonium or amine phosphates is described in postpublished EP-A-406 810.

As mentioned above, there are known in the art salified derivatives of 2,4,6-triamino-1,3,5-triazine (melamine) containing phosphorus, useable as co-additives for self-extinguishing compositions in many polymeric matrices, mainly polyolefinic matrices. These compounds, such as for instance melamine phosphate and melamine pyrophosphate, require the presence of other additives, in particular a component containing the carbon necessary for the char formation, such as a polyol (pentaerythritol, dipentaerythritol, tripentaerythritol) in order to be effective flame-retardants.

In contrast thereto, the compounds used according to the present invention are employed in formulations of polymeric materials as flame-retardant additives of the intumescent type, i.e. they are "char-forming" without the aid of other co-additives.

Furthermore, the compositions of the present invention show the advantage of giving a very moderate and not darkening smoke emission.

More particularly, the compositions of the present invention comprise:
a) from 90 to 40 parts by weight of thermoplastic polymer and/or of polymer showing elastomeric properties;
b) from 10 to 60 parts by weight, preferably from 12 to 40 parts by weight, of one or more derivatives of 2,4,6-triamino-1,3,5-triazine, salified with an oxygenated acid of phosphorus, said derivatives of 2,4,6-triamino-1,3,5-triazine having the general formula (I): 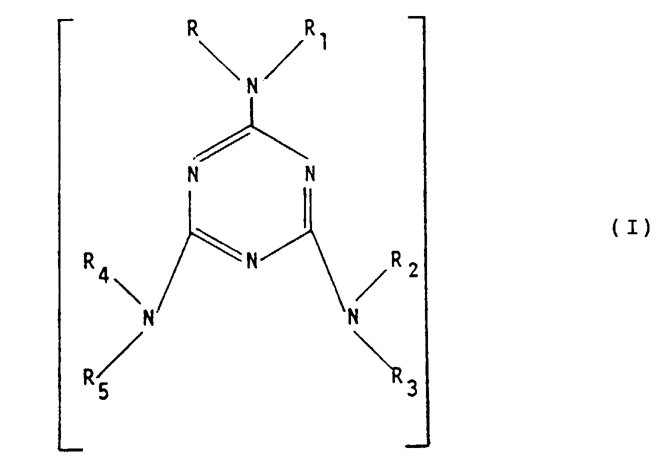
wherein:
at least one of the groups R and R₁ to R₅ is selected from ⁅CₘH₂ₘ⁆O-R₈ and 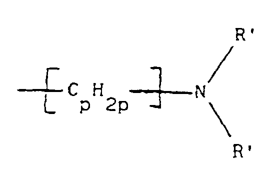 wherein
- m =: an integer of from 2 to 8, preferably from 2 to 4;
- p =: an integer of from 2 to 6, preferably from 2 to 4;
- R₈ =: H; (C₁-C₈) and preferably (C₁-C₄) alkyl; (C₂-C₆) and preferably (C₂-C₄) alkenyl; ⁅C_{q}H_{2q}⁆O-R₉,
q being an integer of from 1 to 4 (e.g. 1 or 2) and
R₉ being hydrogen or (C₁-C₄)alkyl (e.g.methyl,ethyl); (C₆-C₁₂) and preferably (C₆-C₈) cycloalkyl or (C₆-C₁₂) alkylcycloalkyl;
the groups R', the same or different from each other, are selected from H; (C₁-C₈) and preferably (C₁-C₄) alkyl; (C₂-C₆) and preferably (C₂-C₄) alkenyl; (C₆-C₁₂) and preferably (C₆-C₈) cycloalkyl or (C₆-C₁₂) alkylcycloalkyl; and
(C₁-C₄) hydroxyalkyl; or the moiety N(R')₂
is replaced by an N-heterocyclic radical which optionally contains another heteroatom (preferably selected from 0, S and N) and is bound to the alkyl chain through the nitrogen atom;
or in general formula (I) at least one of the groups NRR₁, NR₂R₃ and NR₄R₅ is replaced by an N-heterocyclic radical which optionally contains another heteroatom (preferably selected from O, S and N)and is bound to the triazine ring through the nitrogen atom;
the remaining radicals R and R₁ to R₅, the same or different from each other, have the above meanings or are selected from H; (C₁-C₁₈) and preferably (C₁-C₈) alkyl; (C₂-C₈) and preferably (C₂-C₄) alkenyl; (C₆-C₁₆) and preferably (C₆-C₈) cycloalkyl or (C₆-C₁₆) alkylcycloalkyl, optionally substituted by a hydroxyl or (C₁-C₄) hydroxyalkyl group (e.g. hydroxymethyl or hydroxyethyl).

Preferably component (b) is selected from salts of the general formula (II): 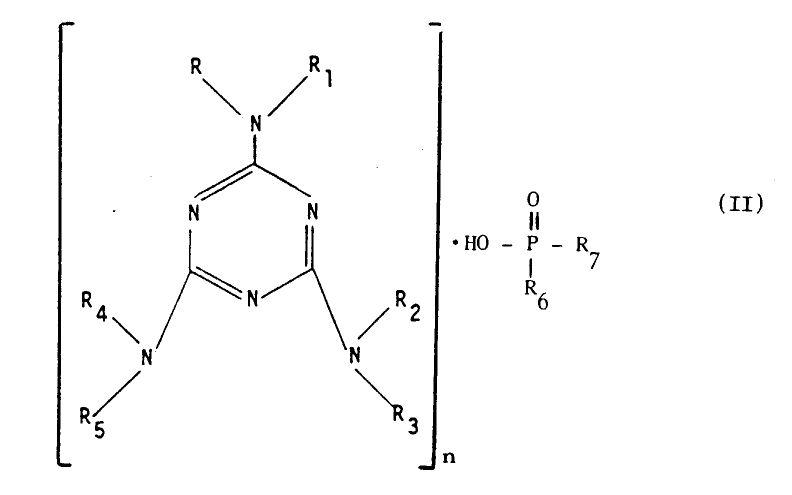 wherein the groups R and R₁ to R₅ have the meanings specified above, provided that when the radicals R' are selected from H; (C₁-C₈) alkyl; (C₂-C₆) alkenyl; (C₆-C₁₂) cycloalkyl or (C₆-C₁₂) alkylcycloalkyl; and (C₁-C₄) hydroxyalkyl, the groups R₆ and R₇, described hereinafter, are different from H and OH, respectively;
- n: is a number of up to 6, in particular from 0.5 to 5 and most preferred from 0.5 to 3;
- R₆: is selected from H; OH; (C₁-C₈) and preferably (C₁-C₄) alkoxy; aryloxy (preferably C₆-C₁₀), optionally substituted by a(C₁-C₈) alkyl group (e.g. methyl or ethyl); aralkyl (preferably C₇-C₁₄), optionally substituted by a (C₁-C₄) alkyl group; (C₁-C₄) alkyl, optionally substituted by a carboxylic group; and aryl (preferably C₆-C₁₀);
- R₇: is selected from H; OH; (C₁-C₈) and preferably (C₁-C₄) alkoxy; aryloxy (preferably C₆-C₁₀); (C₁-C₄) alkyl; aryl (preferably C₆-C₁₀); a group of formula 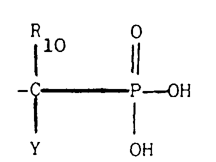
wherein R₁₀ is hydrogen or (C₁-C₁₂) and preferably (C₁-C₆) alkyl and Y is OH or R₁₀;
a group of formula 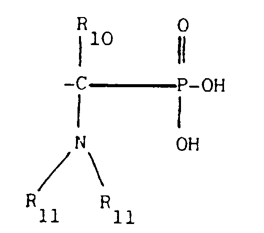 wherein R₁₀ is as defined above and the groups
R₁₁, the same or different from each other, represent hydrogen or (C₁-C₄) alkyl (e.g. methyl or ethyl) or the moiety N(R₁₁)₂ is replaced by an N-heterocyclic radical which optionally contains another heteroatom (preferably selected from O, S and N) and is bound to the carbon atom through the nitrogen atom;
a group of formula 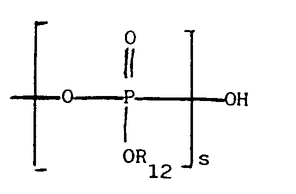 wherein R₁₂ is hydrogen or (C₁-C₈) and preferably (C₁-C₄) alkyl and s is an integer of from 1 to 3 (e.g. 1 or 2);
a group of formula 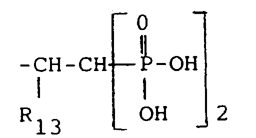 wherein R₁₃ is hydrogen or hydroxy;
a group of formula 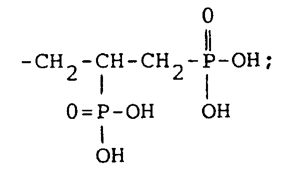 a group of formula 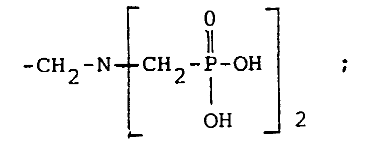 a group of formula 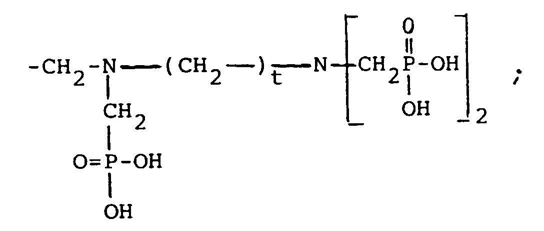 and a group of formula 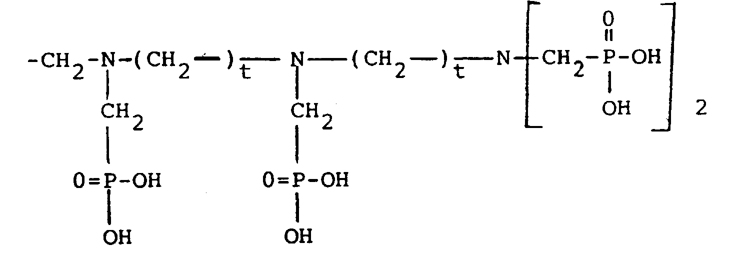 wherein t is an integer of from 2 to 6 (e.g. from 2 to 4); or R₆ and R₇ together form a cyclic structure of one of the following formulae:

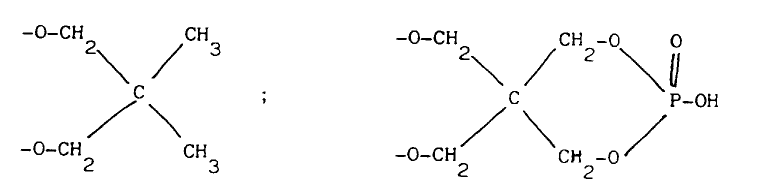

If a further increase of the self-extinguishing characteristics is required for the polymeric compositions of the present invention, it is possible to add thereto 1 to 25 parts by weight of one or more ammonium and/or amine phosphates said phosphates replacing an equal number of parts by weight of component (b).

Examples of radicals R and R₁ to R₅ in general formula (I) are:
methyl; ethyl; propyl; isopropyl; n-butyl; isobutyl; tert.-butyl; n-pentyl; isopentyl; n-hexyl; tert.-hexyl, n-octyl; tert.-octyl; decyl; dodecyl; octadecyl; ethenyl; propenyl; butenyl; isobutenyl; hexenyl; octenyl; cyclohexyl; propylcyclohexyl; butylcyclohexyl; decylcyclohexyl; hydroxycyclohexyl; hydroxyethylcyclohexyl; 2-hydroxyethyl; 2-hydroxypropyl; 3-hydroxypropyl; 3-hydroxybutyl; 4-hydroxybutyl; 3-hydroxypentyl; 5-hydroxypentyl; 6-hydroxyhexyl; 3-hydroxy-2,5-dimethylhexyl; 7-hydroxyheptyl; 7-hydroxyoctyl; 2-methoxyethyl; 2-methoxypropyl; 3-methoxypropyl; 4-methoxybutyl; 6-methoxyhexyl; 7-methoxyheptyl; 7-methoxyoctyl; 2-ethoxyethyl; 3-ethoxypropyl; 4-ethoxybutyl; 3-propoxypropyl; 3-butoxypropyl; 4-butoxybutyl; 4-isobutoxybutyl; 5-propoxypentyl; 2-cyclohexyloxyethyl; 2-ethenyloxyethyl; 2-(N,N-dimethylamino)ethyl; 3-(N,N-dimethylamino)propyl; 4-(N,N-dimethylamino)butyl; 5-(N,N-dimethylamino)pentyl; 4-(N,N-diethylamino)butyl; 5-(N,N-diethylamino)pentyl; 5-(N,N-diisopropylamino)pentyl; 3-(N -ethylamino)propyl; 4-(N-methylamino)butyl; 4-(N,N-dipropylamino)hexyl; 4-(N,N-dipropylamino)butyl; 2-(N,N-diisopropylamino)ethyl; 6-(N-hexenylamino)hexyl; 2-(N-ethenylamino)ethyl; 2-(N-cyclohexylamino)ethyl; 2-(N-2-hydroxyethylamino)ethyl; 2-(2-hydroxyethoxy)ethyl; 2-(2-methoxyethoxy)ethyl; 6-(N-propylamino)hexyl; etc.

Examples of heterocyclic radicals which may replace the groups NRR₁, NR₂R₃ and NR₄R₅ in general formula (I) are aziridinyl; pyrrolidinyl; piperidinyl; morpholinyl; thiomorpholinyl; piperazinyl; 4-methylpiperazinyl; 4-ethylpiperazinyl; 2-methylpiperazinyl; 2,5-dimethylpiperazinyl; 2,3,5,6-tetramethylpiperazinyl; 2,2,5,5-tetramethylpiperazinyl; 2-ethylpiperazinyl; 2,5-diethylpiperazinyl, etc. Particularly preferred examples are morpholinyl, thiomorpholinyl and piperazinyl.

Examples of heterocyclic radicals which may replace the moiety N(R')₂ are
aziridinyl, pyrrolidinyl, piperidinyl; morpholinyl; thiomorpholinyl; piperazinyl; 4-methylpiperazinyl; 4-ethylpiperazinyl; etc. Particularly preferred are morpholinyl, thiomorpholinyl and piperazinyl.

Examples of suitable phorphorus-containing acids are hypophosphorous acid; phosphorous acid; phosphoric acid; pyrophosphoric acid; tripolyphosphoric acid; ethane-1,1,2-triphosphonic acid; 2-hydroxyethane-1,1,2-triphosphonic acid; propane-1,2,3-triphosphonic acid; isopropylphosphoric acid; n-butylphosphoric acid; di-n-butylphosphoric acid; diisopropylphosphoric acid; di-n-pentylphosphoric acid; isooctylphosphoric acid; ethylphosphoric acid; hexylphosphoric acid; 2-ethylhexylphosphoric acid; methylphosphonic acid; ethylphosphonic acid; n-propylphosphonic acid; n-butylphosphonic acid; aminomethylphosphonic acid; phenylphosphoric acid; phenylphosphonic acid; phenylphosphinic acid; di-n-butylpyrophosphoric acid; di(2-ethylhexyl)pyrophosphoric acid; octylphenylpnosphoric acid; 2-methylbenzylphosphonic acid; 1-aminoethane-1,1-diphosphonic acid; 1-hydroxyethane-1,1-diphosphonic acid; 1-hydroxydodecane-1,1-diphosphonic acid; 1-(N-methylamino)ethane-1,1-diphosphonic acid; N,N-dimethylaminomethane-1,1-diphosphonic acid; N-butylaminomethane-1,1-disphosphonic acid; phosphonoacetic acid; 2-phosphonopropionic acid; 3-phosphonopropionic acid; 2-phosphonobutyrric acid; 4-phosphonobutyric acid; 2-hydroxy-5,5-dimethyl-2-oxo-1,3,2-dioxophosphorinane; 3,9-dihydroxy2,4,8,10-tetroxo-3,9-diphosphaspiro[5.5] undecane-3,9-dioxide; aminotris(methylenephosphonic) acid; ethylenediaminotetra (methylenephosphonic) acid; hexamethylenediaminotetra(methylenephosphonic) acid; diethylenetriaminopenta(methylenephosphonic) acid; etc.

Particularly preferred are salts of compounds of formula (I) wherein one or two of the moieties NRR₁, NR₂R₃ and NR₄R₅ represent NH₂.

Specific examples of salts of compounds of general formula (I) which can advantageously be used in the compositions of the present invention, are given in the examples following the present description.

Salts which represent the component (b) can be prepared according to processes described in detail in EP-A-453 871 having the title "Salts of triazine derivatives with oxygenated acids of phosphorus" filed on even date herewith.

In short, the above salts can be synthesized, e.g., by reacting n mols of a derivative of 2,4,6-triamino-1,3,5-triazine of the above general formula (I) in the presence of a suitable solvent (such as, for instance, water, methyl alcohol, ethyl alcohol, acetonitrile, etc.) and at temperatures of from 0°C to the boiling point of the solvent used, with one mol of phosphorus-containing acid, or in the absence of a solvent and with an excess of the phosphorus-containing acid, when the latter can act as solvent, at temperatures of from about 0 to about 150°C.

The salt thus formed can easily be separated from the reaction mass, e.g., by filtration or by distilling off the solvent.

Generally, products of good quality are obtained in the form of a white crystalline powder, useable in the self-extinguishing polymeric compositions without any further purification.

Many of the intermediates of general formula (II) are known; however, they also can easily be synthesized according to the following general scheme: 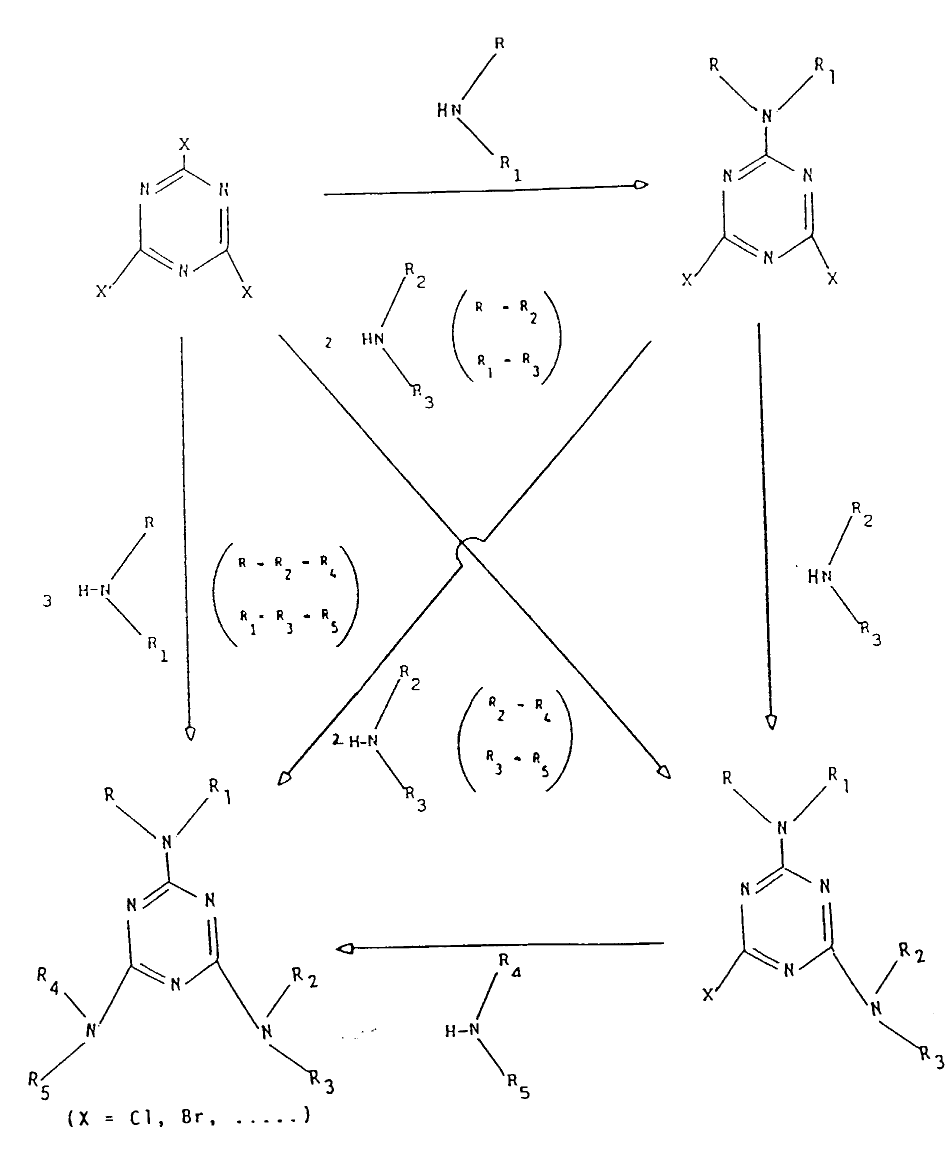 or according to the process disclosed in IT-A-21066 A/89.

Among the phosphates which may be used according to claim 7 in addition to component (b), ammonium polyphosphates of general formula (NH₄)ₙ₊₂PₙO_{3n+1'} wherein n represents an integer equal to or higher than 2 are preferred. Preferably, the molecular weight of the polyphosphates is sufficiently high to warrant a low solubility in water. For example, n varies preferably in the range of from 2 to 500.

The composition of the polyphosphates having the formula indicated hereinabove, in which n is a high enough number, and preferably ranges from 5 to 500, practically corresponds to a metaphosphate of formula

(NH₄PO₃)ₙ

An example of said polyphosphates is the product known under the trade name "Exolit^{®} 422" (Hoechst), having the composition (NH₄PO₃)ₙ in which n is greater than 50. Another example is the product known under the name "Phos-Chek^{®} P/30" (Monsanto Chemical) which has a similar composition.

Another polyphosphate which can be used advantageously, above all thanks to its low solubility in water, is the product known under the trade name "Exolit^{®} 462" (Hoechst) which is "Exolit^{®} 422" microencapsulated in melamineformaldehyde resin.

Other phosphates which can be used are those which are derived from amines, such as, e.g., dimethyl ammonium phosphate or diethyl ammonium phosphate, ethylene diamine phosphate, melamine orthophosphate or melamine pyrophosphate.

Among the polymers which can be used in the compositions according to the present invention, preferred are polymers and copolymers of olefins of general formula

R" - CH = CH₂

wherein R" is hydrogen or a (C₁₋₈)-alkyl or (C₆₋₁₀)-aryl radical, in particular:
(1) isotactic or prevailingly isotactic polypropylene;
(2) HDPE, LLDPE and LDPE polyethylene;
(3) crystalline copolymers of propylene and minor amounts of ethylene and/or of other alpha-olefins, such as, e.g., 1-butene, 1-hexene, 1-octene, 4-methyl-1-pentene;
(4) heterophasic compositions comprising (A) a fraction constituted by a propylene homopolymer, or by one of the copolymers defined under (3); and (B) a copolymeric fraction constituted by elastomeric copolymers of ethylene and an alpha-olefin, optionally containing minor proportions of one or more dienes, wherein the alpha-olefin is preferably selected from propylene and 1-butene; and
(5) elastomeric copolymers of ethylene and alpha-olefin(s), optionally containing minor proportions of one or more dienes.

Examples of dienes more commonly contained in said elastomeric copolymers are butadiene, ethylidene-norbornene and hexadiene-1,4.

Among the polymers of olefins of general formula R'-CH=CH₂ wherein R' is an aryl radical, "crystal" and impact-resistant polystyrene are preferred.

Other examples of polymers which can be used are acrylonitrile/butadiene/styrene terpolymers (ABS); styrene/acrylonitrile copolymers (SAN); polyurethanes (of polyester or polyether grade); poly(ethylene terephthalate); poly(butylene terephthalate); polyamides; etc.

The self-extinguishing compositions according to the present invention can be prepared according to known methods in the art. For example, ammonium and/or amine phosphate is first intimately mixed with one or more finely ground (preferably with particles having a size lower than 70 µm) salts of compounds of the general formula (I) and the mixture thus obtained is added to the polymer in a turbomixer to give a homogeneous blend which may then be extruded and granulated. The granular product thus obtained can be transformed into various articles, according to any of the well-known molding techniques.

The fire-retardant additives used according to the present invention can also be employed in the field of flame-retardant paints.

The following examples illustrate but do not limit the present invention.

### EXAMPLE 1

Into a 3 l-reactor equipped with stirrer, thermometer, dropping funnel, reflux cooler and heating bath, there were introduced 184.5 g of cyanuric acid chloride and 800 ml of acetone.

The mixture was stirred while heating it to 40°C until a solution was obtained; thereafter, within 1.5 h and while keeping the temperature at 40°C, 284 g of aqueous ammonia (30% by weight) was added. The resulting mixture was then heated to 45°C and kept at this temperature for 4 hours.

After cooling, the formed product was filtered off and washed with water on the filter.

After drying in an oven at 50 to 60°C under vacuum, 115 g of the intermediate of formula (III): 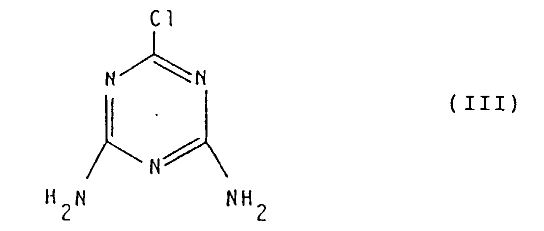 were obtained in the form of an infusible, white crystalline powder having a chlorine content of 24.12 % (theor. 24.36 %).

The structure of this product was further confirmed by IR spectroscopic analysis.

Into a 1 liter reactor equipped with stirrer, thermometer, dropping funnel, reflux cooler and heating bath, there were introduced 72.8 g of the intermediate (III), 350 g of water and thereafter, under agitation, 44 g of piperidine.

The resulting mixture was heated to reflux and kept there for 4 hours.

Thereafter, still under reflux conditions, portions of 20 g of sodium hydroxide in 50 g of water were added over 8 hours in order to keep the pH between 7 and 8.

After cooling to room temperature, the formed product was filtered and washed on the filter with water.

After drying in an oven at 60°C under vacuum, 90 g of 2,4-diamino-6-piperidino-1,3,5-triazine were obtained in the form of a white crystalline powder, m.p. = 215 to 217°C (m.p. = melting point).

Into the same 1 liter reactor there were then introduced 77.6 g of the above 2,4-diamino-6-piperidino-1,3,5-triazine, 400 ml of water and, under stirring, 48.4 g of phosphoric acid (85 % by weight).

The resulting mixture was heated to 80°C and kept at this temperature for 4 hours.

After cooling to 10°C, the formed product was filtered and washed on the filter with water.

After drying in an oven at 100°C, 96 g of the product of formula 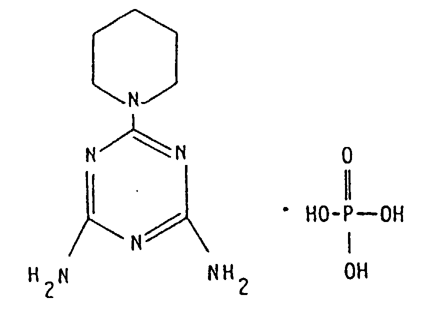 were obtained in the form of a crystalline powder having a m.p. of 228 to 230°C and a phosphorus content of 10.52 % (theor. 10.61 %).

### EXAMPLE 2

Into a 0.5 l-reactor, equipped like that described in example 1, there were introduced 49.0 g of the intermediate (III), 150 ml of water and 26.2 g of 2-methoxyethylamine.

The mixture was heated to reflux and was kept there for 4 hours.

Thereafter, a solution of 14 g of sodium hydroxide in 50 ml of water was added within 20 minutes.

After stirring for a further 30 minutes, the distillation of water began; the residual mass was then treated with three 100 ml portions of acetonitrile in order to extract the organic product from the mass.

Upon subsequent distillation of the solvent, 52.5 g of 2,4-diamino-6-(2-methoxyethyl)amino-1,3,5-triazine were obtained as white powder (m.p. = 166 to 169°C).

Into the 1 l-reactor of example 1, there were introduced 52.5 g of 2,4-diamino-6-(2-methoxyethyl)amino-1,3,5-triazine, 600 ml of acetonitrile and, under stirring, 34.5 g of phosphoric acid (85% by weight).

The resulting mixture was heated to reflux and was kept there for 4 hours.

After cooling to room temperature, the formed product was filtered and washed on the filter with acetonitrile.

After drying in an oven at 100°C, 78 g of the product of formula 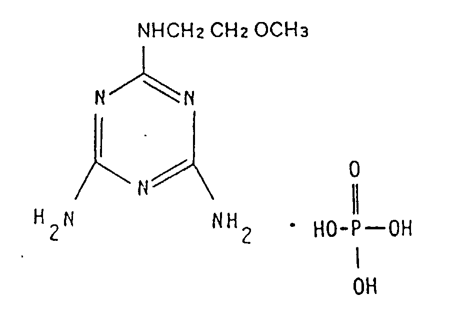 were obtained in the form of white crystalline powder having a m.p. of 186 to 188°C and a phosphorus content of 11.0% (theor. 10.98 %).

### EXAMPLE 3

Into the 1 l-reactor described in example 1 there were introduced 91 g of the intermediate (III),240 ml of toluene and 110 g of morpholine.

The mixture was heated to 65 to 70°C and kept at this temperature for 2 hours; thereafter, it was heated to reflux and was kept there for 1 hour.

Then the mixture was allowed to cool to room temperature and the formed product was separated by filtration. The cake was thoroughly washed with water and, after drying, 92 g of 2,4-diamino-6-morpholino-1,3,5-triazine were obtained in the form of a white crystalline powder having a m.p. of 248 to 250°C.

Into a 0.5 l-reactor equipped as described in example 1, there were introduced 39.9 g of the above 2,4-diamino-6-morpholino-1,3,5-triazine, 250 ml of acetonitrile and, under stirring, 24.2 g of phosphoric acid (85% by weight).

The resulting mixture was heated to reflux and was kept there for 8 hours.

Then, by working as described in example 2, 57 g of the product of formula 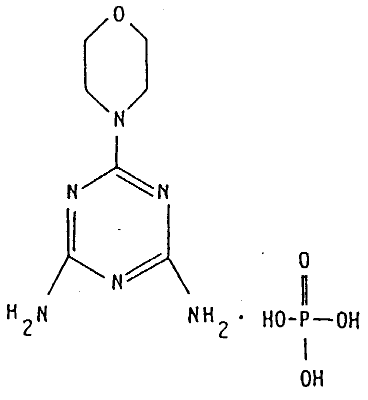 were obtained in the form of a white crystalline powder having a m.p. of 250 to 252°C and a phosphorus content of 10.5% (theor. 10.54 %).

### EXAMPLE 4

Into a 1 l-reactor equipped as described in example 1 there were introduced 72.8 g of the intermediate (III), 250 ml of water and, under stirring, 104 g of thiomorpholine.

The resulting mixture was heated to reflux and was kept there for 8 hours.

Then the reaction mixture was cooled to room temperature and the formed product was filtered and the filter cake was washed with water.

After drying in an oven at 100°C, 90.2 g of 2,4-diamino-6-thiomorpholino-1,3,5-triazine were obtained in the form of a white crystalline powder; m.p. = 237 to 239°C.

Into the same 1 l-reactor there were introduced 41.4 g of the above 2,4-diamino-6-thiomorpholino-1,3,5-triazine, 300 ml of water and, under stirring, 32.5 g of phenylphosphonic acid.

The mixture was heated to 80°C and was kept at this temperature for 6 hours.

After cooling to room temperature, the formed product was filtered and washed on the filter with a small amount of water.

After drying in an oven at 100°C, 64.7 g of the product of formula 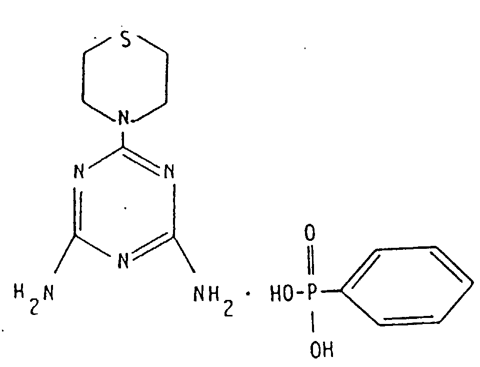 were obtained in the form of a white powder; m.p. 265 to 269°C; phosphorus content = 8.14 % (theor. 8.38 %).

### EXAMPLE 5

Into the 3 l-reactor of example 1, there were introduced 136 g of the intermediate (III) and 800 ml of xylene.

The resulting suspension was heated to 120°C and within 1 h 302 g of the ethyl ester of N-piperazine carboxylic acid were added.

The reation mixture was kept at 125 to 130°C for 2 hours, then was cooled to room temperature and the formed product was filtered, washing the filter cake first with xylene and then thoroughly with water.

After drying in an oven at 100°C, 230 g of the intermediate of formula (IV): 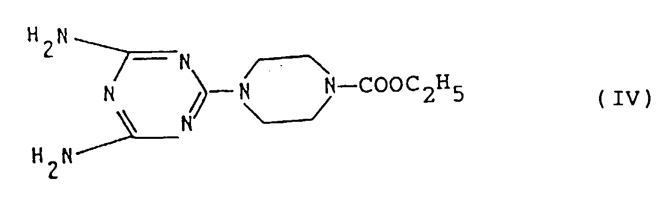 were obtained in the form of a white crystalline powder;
m.p. = 210 to 215°C.

The structure of this intermediate was confirmed by NMR analysis.

Into the above 3 l-reactor there were introduced 1000 ml of acetic acid, 620 g of acetic solution of hydrobromic acid (33% by weight) and 120 g of the intermediate (IV).

The resulting mixture was heated to 95°C and was kept at this temperature for 6 hours under stirring.

Thereafter the reaction mixture was cooled to room temperature and the formed product was filtered and washed on the filter with acetic acid.

The squeezed filter cake was then treated in a 2 l-beaker with 500 ml of water and,under stirring, a 50% by weight sodium hydroxide solution was added thereto until the pH reached 11.

The resulting mixture was stirred for a further hour and then the formed product was filtered and washed thoroughly on the filter with water.

After drying in an oven at 100°C, 60 g of 2,4-diamino-6-piperazino-1,3,5-triazine were obtained in the form of a white powder; m.p. = 262 to 268°C.

Into the 1 l-reactor of example 1, now equipped with a cooling bath, there were introduced 106.4 g of tetrasodium pyrophosphate and 600 ml of water.

The mixture was externally cooled to 5°C and thereafter 158 g of hydrochloric acid (37% by weight) were added, whereby a solution was obtained.

To this solution, always at 5°C, there were added 78 g of the above 2,4-diamino-6-piperazino-1,3,5-triazine.

The resulting mixture was stirred for 2 hours at 5°C whereafter it was heated to 10°C and was kept at this new temperature for 3 hours.

After cooling to 2°C the formed product was separated by filtration and the cake was washed on the filter with a small amount of cold water.

After drying in an oven at 100°C, 102 g of the product of formula 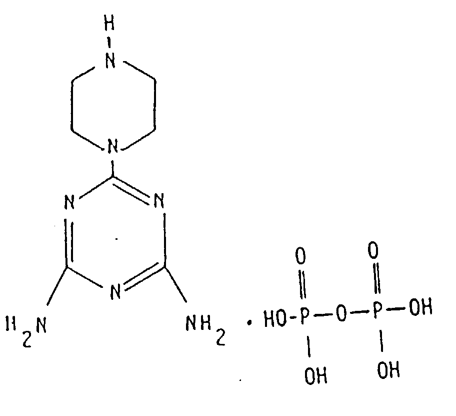 were obtained in the form of a white powder; m.p. = 295 to 298°C; phosphorus content equal to 16.8% (theor. 16.61 %).

### EXAMPLE 6

Into the 3 l-reactor described in example 1, but at the beginning equipped with a cooling bath, there were introduced 184.5 g of cyanuric acid chloride and 1300 ml of methylene chloride.

While cooling from the outside, 87.2 g of morpholine and 40 g of sodium hydroxide, dissolved in 150 g of water, were simultaneously introduced into the reactor within 3 hours, while keeping the pH between 5 to 7 and the temperature between 0 and 3°C.

The resulting mixture was further kept at a temperature of from 0 to 3°C for 3 hours and then the aqueous phase was separated.

By distillation of the methylene chloride, 230 g of the intermediate of formula (V). 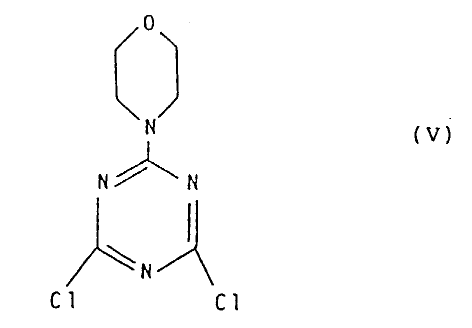 were obtained in the form of a white crystalline powder; m.p.= 155 to 157°C; titre higher than 98% (determined by gas chromatography); chlorine content equal to 29.87 % (theor. 30.21 %).

Into a 0.5 l-reactor, equipped like that described in example 1, there were introduced 100 g of aqueous ammonia (30% by weight), 100 ml of water and 70.5 g of the intermediate (V).

The resulting mixture was heated to 50°C and was kept at this temperature for 7 hours; after having allowed the mixture to cool to room temperature, the obtained product was filtered and washed with water.

Upon drying the cake, 58 g of the intermediate of formula (VI): 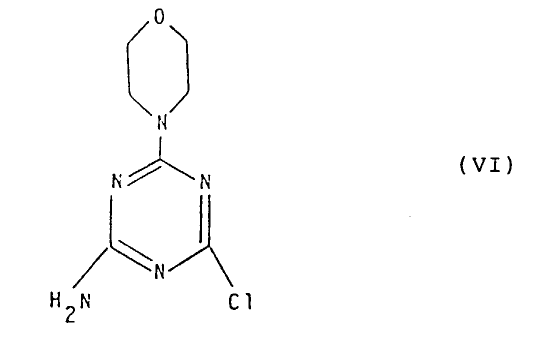 were obtained in the form of a white crystalline powder; m.p. = 189 to 191°C; chlorine content 16.28 % (theor. 16.47 %).

The structure of compounds (V) and (VI) was confirmed by IR spectroscopic analysis.

Into the reactor described above there were introduced 58 g of the intermediate (VI) and 300 g of water and thereafter, under stirring, 18 g of 2-aminoethanol.

The resulting mixture was heated to reflux and was kept there for 3 hours.

Thereafter the mixture was further kept under reflux for 3 hours while adding in portions 11.8 g of sodium hydroxide dissolved in 50 g of water in order to maintain the pH between 7 and 8.

Then the reaction mixture was cooled, the obtained product was filtered and the filter cake was washed with water.

Upon drying 58 g of 2-amino-4-(2-hydroxyethyl)amino-6-morpholino-1,3,5-triazine, in the form of white powder, were obtained; m.p. = 159 to 161°C.

Into a 1 l-reactor,equipped like that of example 1, there were introduced 328 g of phosphorous acid and 82 g of acetonitrile and the reaction mixture was gradually heated, within 6 hours, up to 160°C, resulting in the formation of a white crystalline product.

Subsequently, the mixture was cooled to 80°C and 500 ml of water were added under vigorous stirring, followed by cooling to room temperature.

The formed product was separated by filtration and washed on the filter with a small amount of water.

Upon drying of the filter cake, 290 g of 1-aminoethane-1,1-diphosphonic acid were obtained in the form of a white crystalline powder; m.p. = 265 to 270°C (with decomposition); phosphorus content equal to 29.4% (theor. 30.24 %).

Into a 0.5 l-reactor, equipped like that described in example 1, there were introduced 200 ml of water, 36 g of 2-amino-4-(2-hydroxyethyl)amino-6-morpholino-1,3,5-triazine and 16 g of the above 1-aminoethane-1,1-diphosphonic acid.

The resulting mixture was heated to 80°C and was kept at this temperature for 1 hour, whereafter the distillation of the solvent was commenced.

Upon drying the solid remaining after said distillation in an oven at 100°C, there were obtained 51.6 g of the product of formula 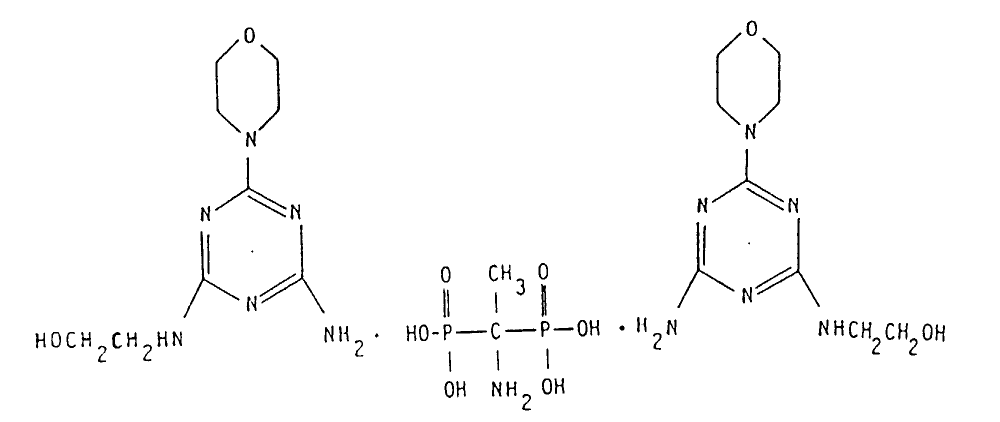 in the form of a white crystalline powder; m.p. = 144 to 148°C; phosphorus content 8.8% (theor. 9.04 %).

### EXAMPLE 7

Into a 0.5 l-reactor, equipped as described in example 1, there were introduced 39.2 g of 2,4-diamino-6-morpholino-1,3,5-triazine (prepared as described in example 3), 300 ml of ethanol and, under stirring, 17.2 g of phosphoric acid.

The resulting mixture was kept at room temperature for 8 hours under stirring; thereafter, the formed product was filtered and washed on the filter with a small amount of solvent.

Upon drying the filter cake in an oven at 100°C, 55 g of the product of formula 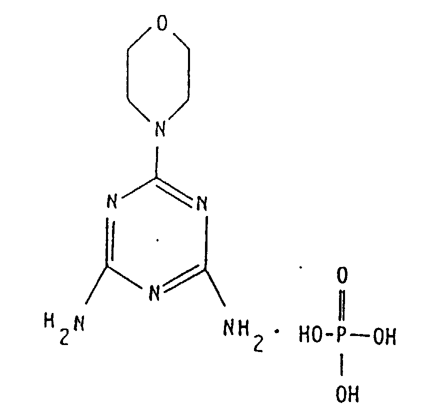 were obtained in the form of a white crystalline powder;
m.p. = 240 to 244°C; phosphorus content equal to 11.0% (theor. 11.13 %).

### EXAMPLES 8 to 32

By working under conditions analogous to those described in examples 1 to 7 the salts of general formula (II) listed in Table 1 were prepared.

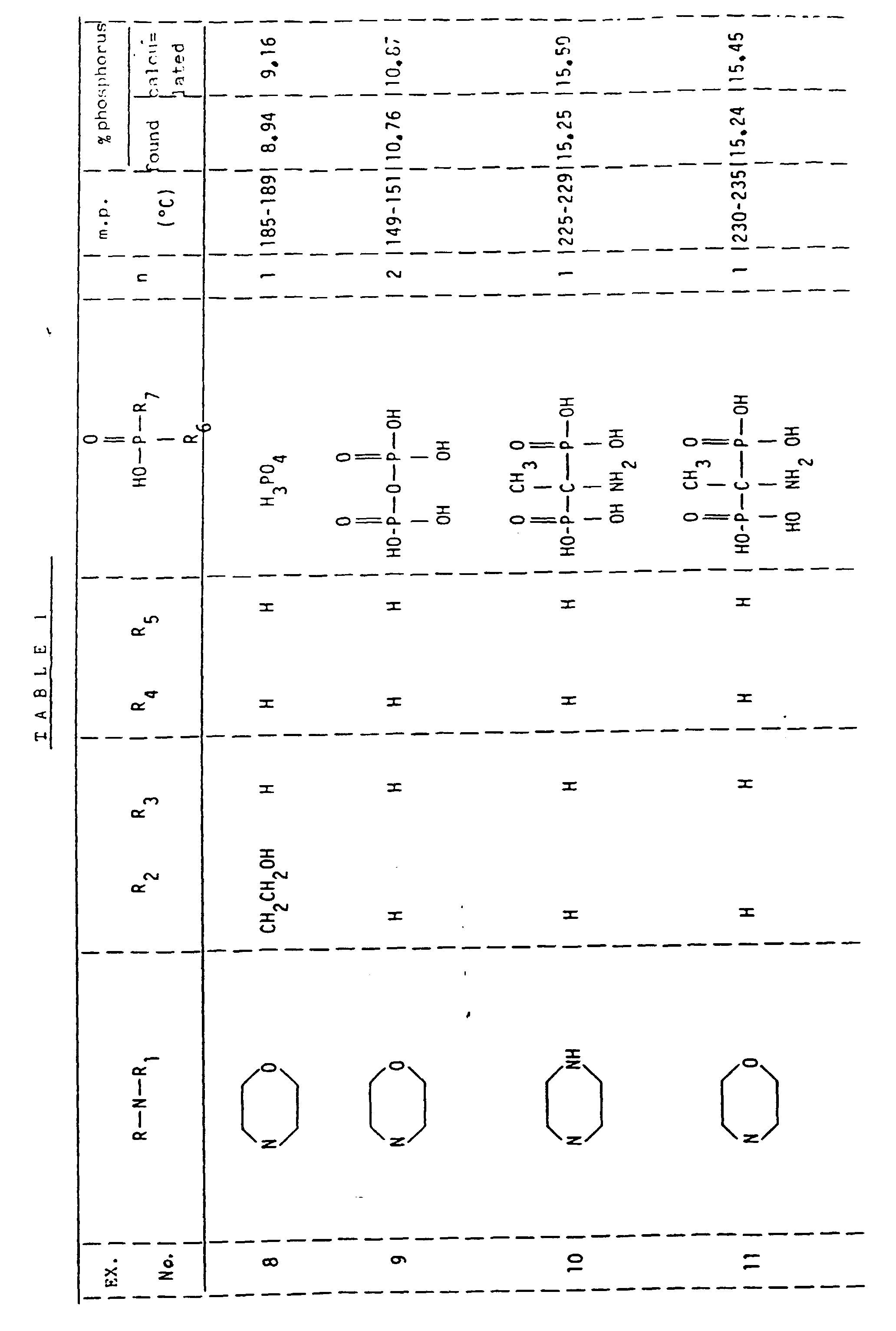

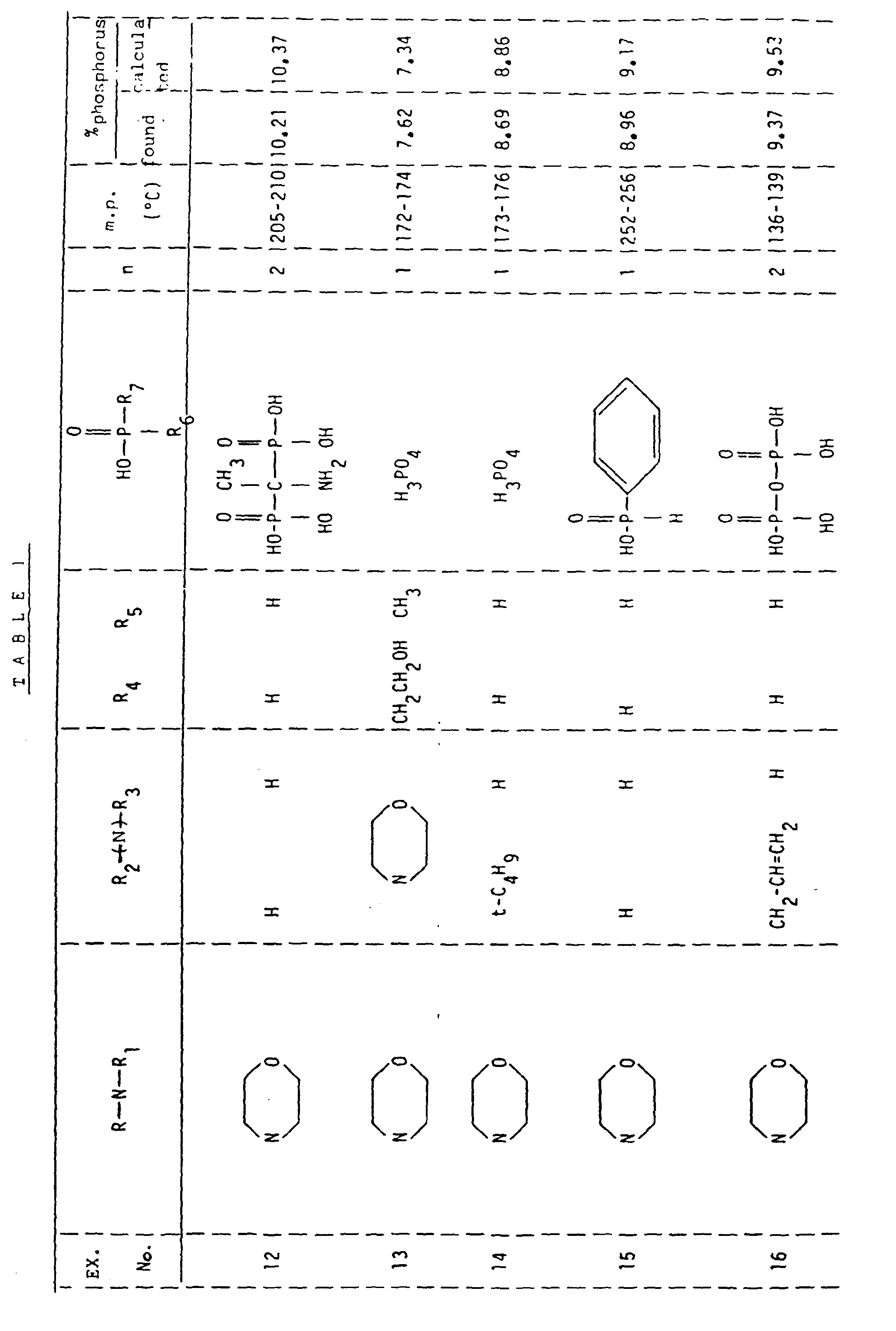

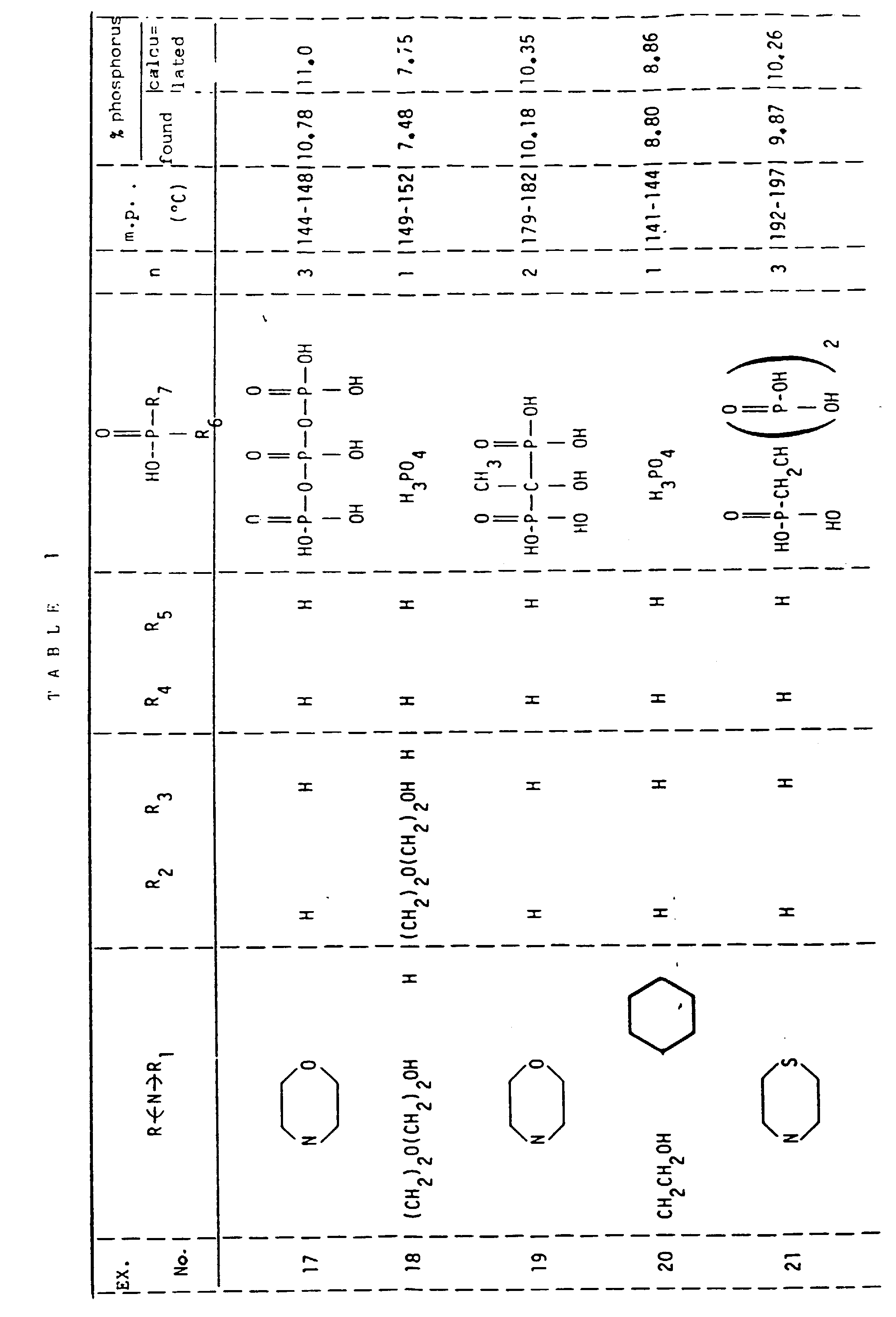

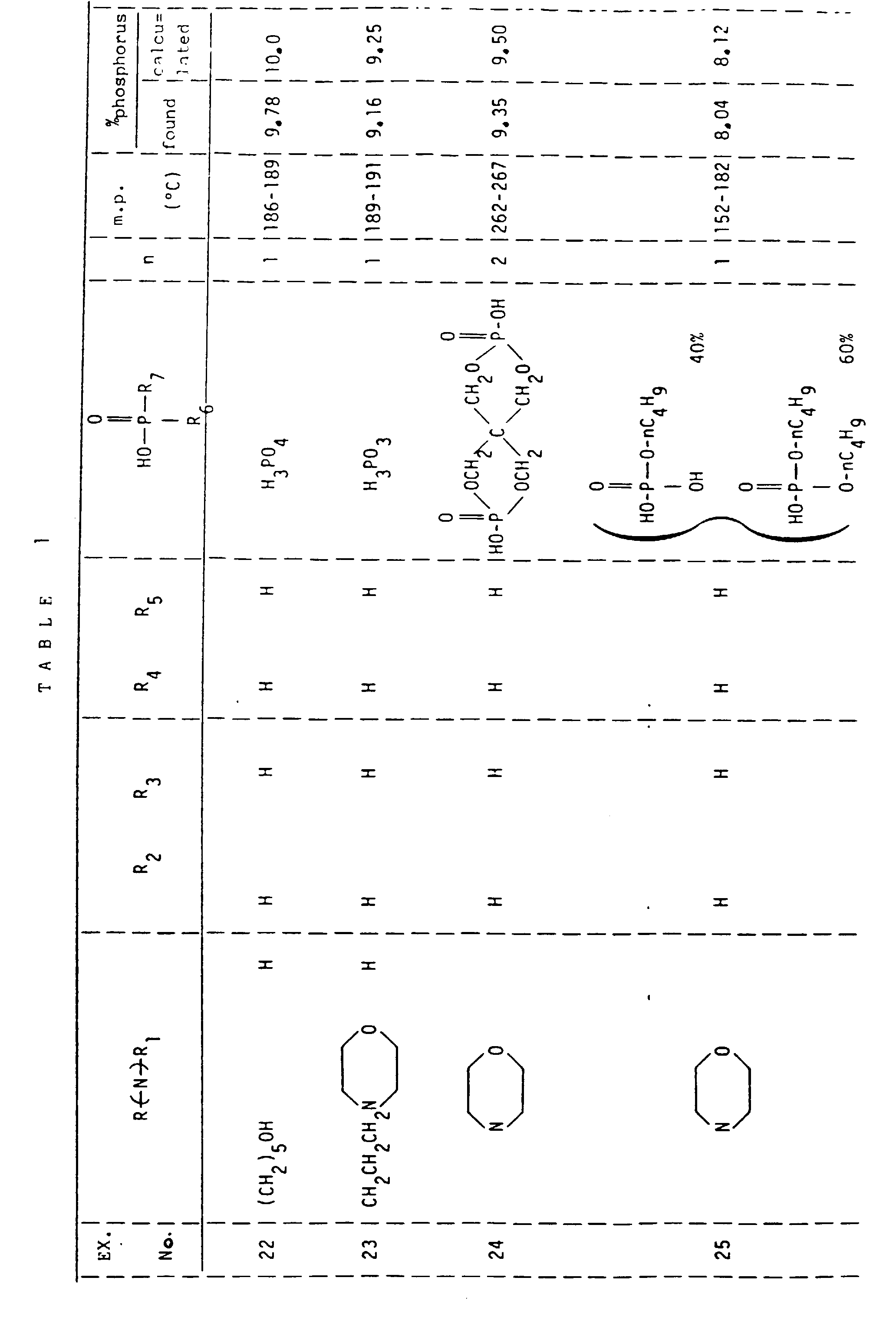

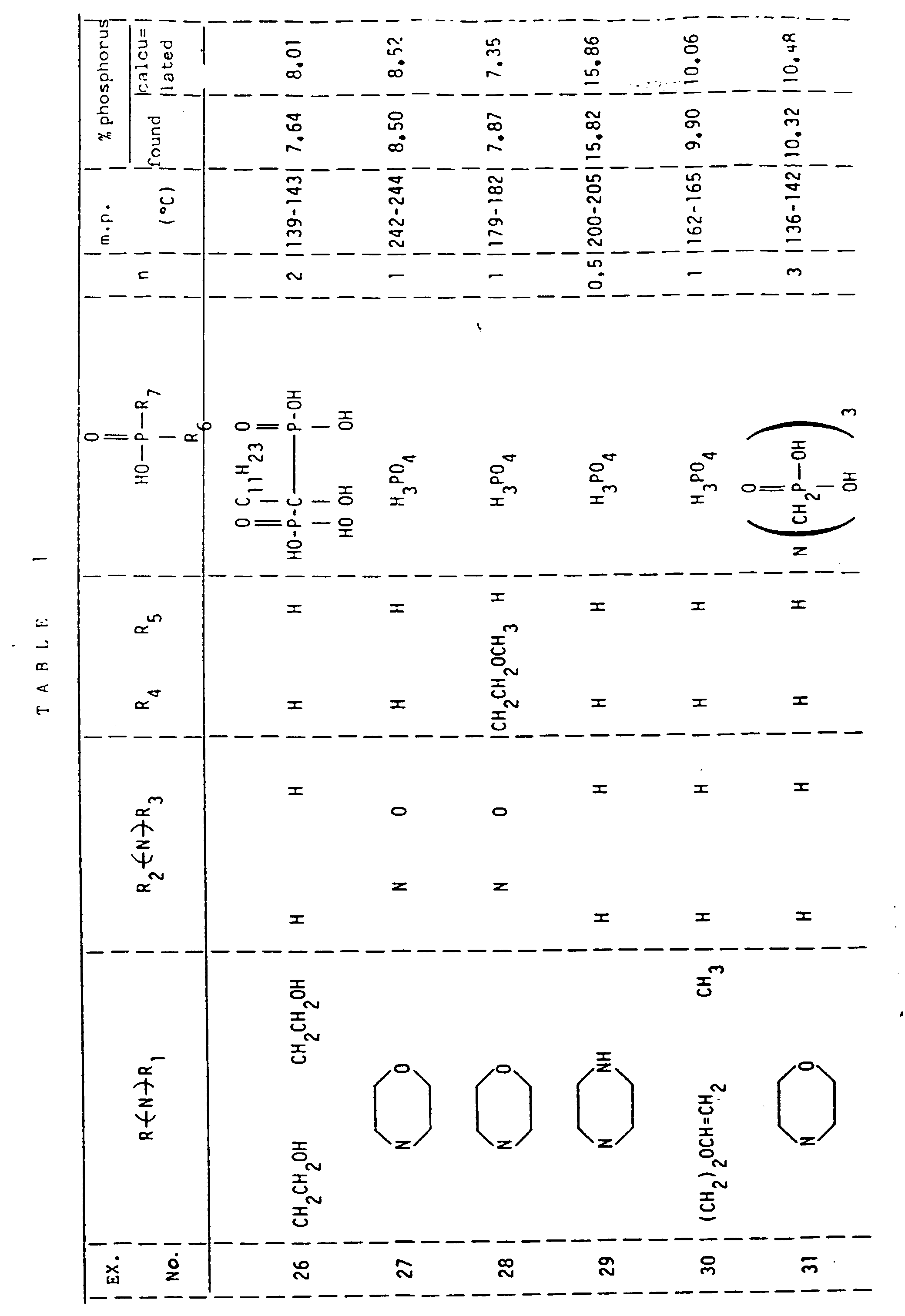

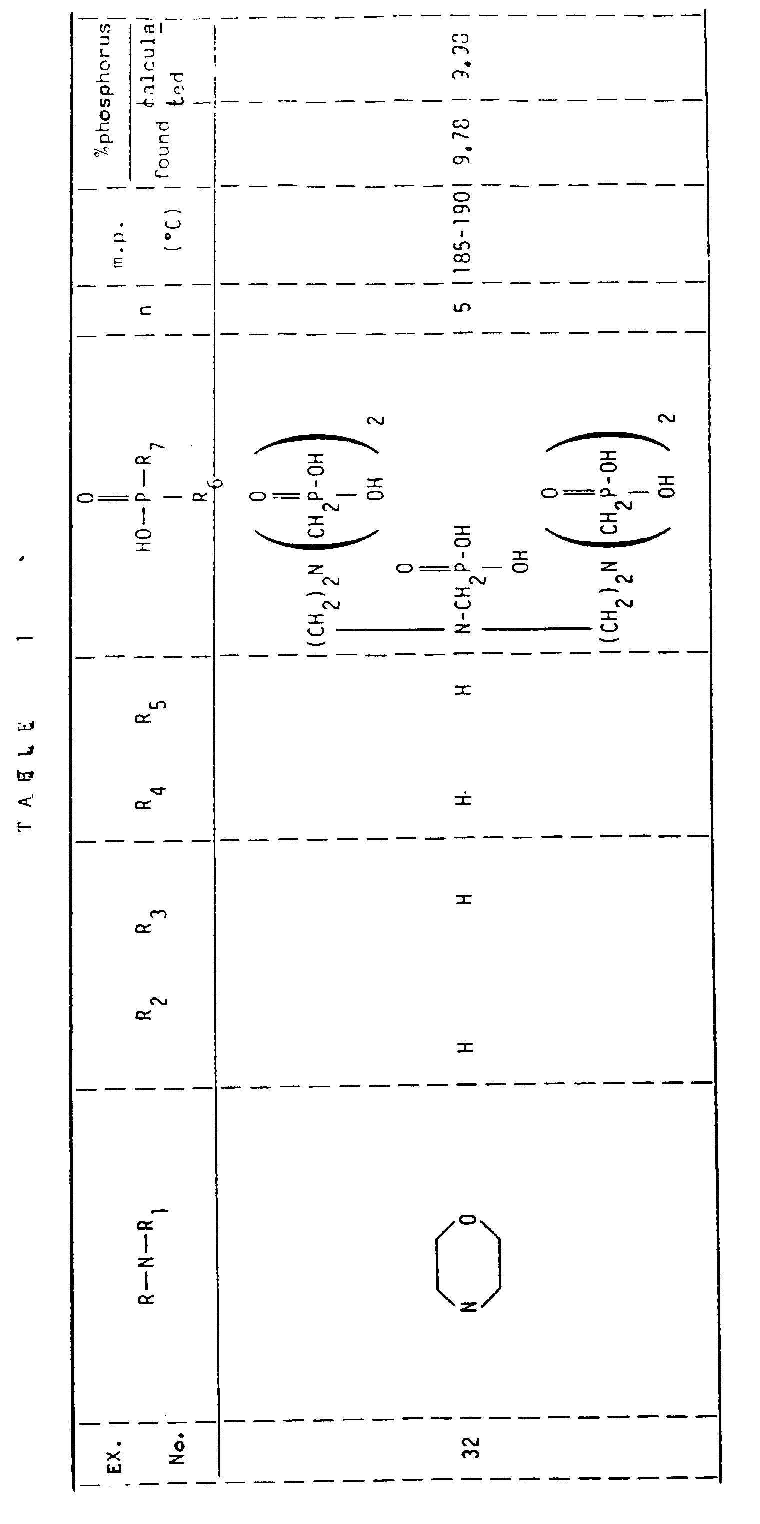

### EXAMPLES 33 to 104

The tests reported in the following tables 2 and 3 relate to polymeric compositions containing salts prepared according to the preceding examples.

Specimens were prepared in the form of small plates having a thickness of about 3 mm, by molding mixtures of granular polymer and additives in a MOORE platen press, working for 7 minutes at a pressure of 40 kg/cm².

On the plates thus obtained the self-extinguishing level was determined by measuring the oxygen index (L.O.I. according to ASTM D-2863/77) in a Stanton Redcroft apparatus and applying the "Vertical Burning Test" which allows to classify the material according to three ratings, i.e., V-O, V-1 and V-2 (according to standard UL 94 published by "Underwriter Laboratories"-USA).

In Table 2 values are reported which have been obtained by using isotactic polypropylene flakes having a melt flow index of 12 and an insoluble fraction in boiling n-heptane of 96% by weight.

In Table 3 values are reported which have been obtained by using a granular low density polyethylene having a melt flow index of 7; a granular polystyrene containing 5% by weight of butadiene rubber and having a melt flow index of 9; a thermoplastic granular polyurethane, derived from either polyester (ESTANE 54600^{®}, Goodrich) or polyether (ESTANE 58300^{®}, Goodrich),having a specific gravity of 1.19 and 1.10 g/cm³ respectively; an elastomeric ethylene-propylene copolymer having a propylene content of 45%; an acrylonitrile-butadiene-styrene terpolymer having a specific gravity of 1.06 g/cm³ and a melt flow index of 1.6 and containing about 40% of both acrylonitrile and styrene and 20% of butadiene.

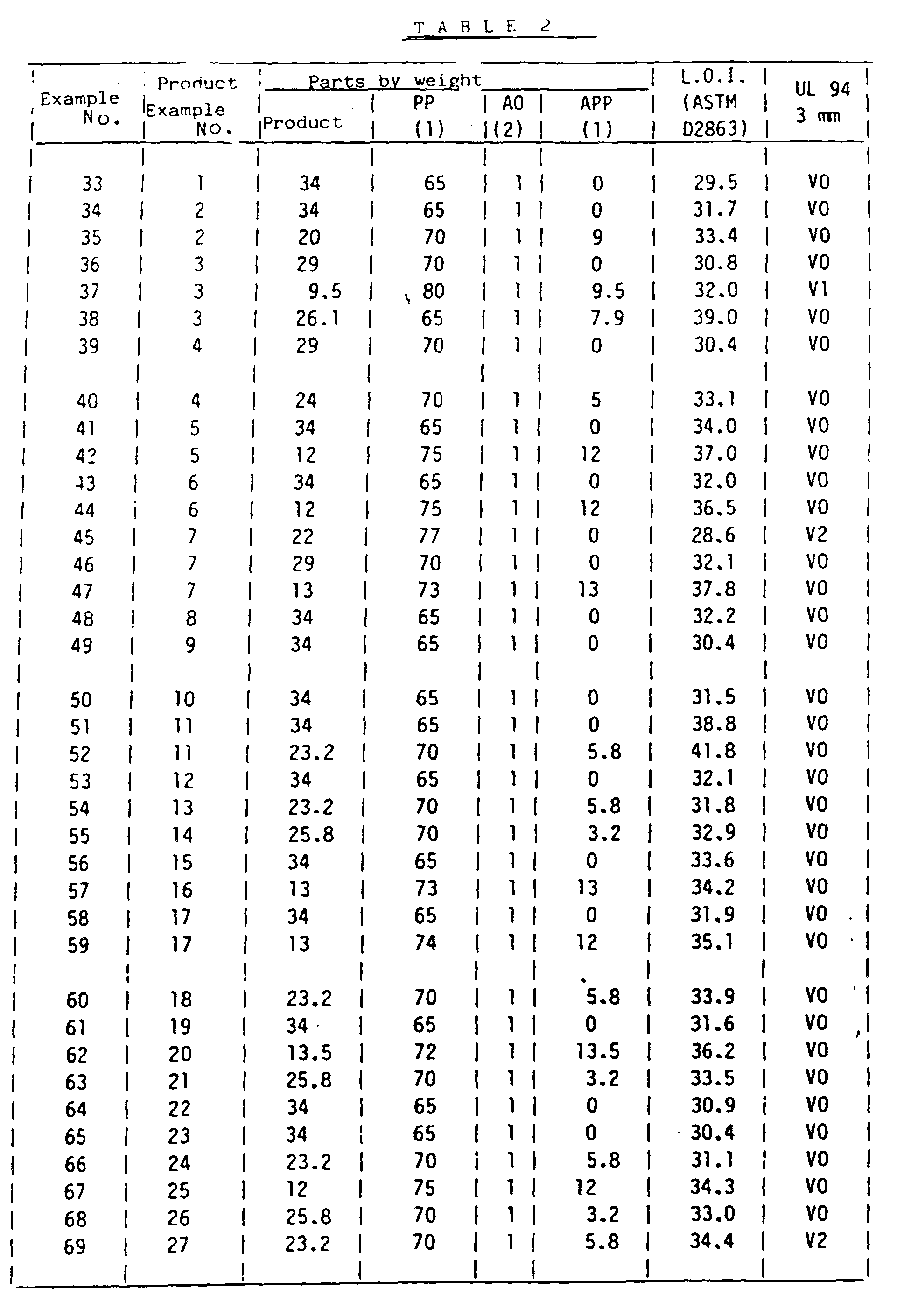

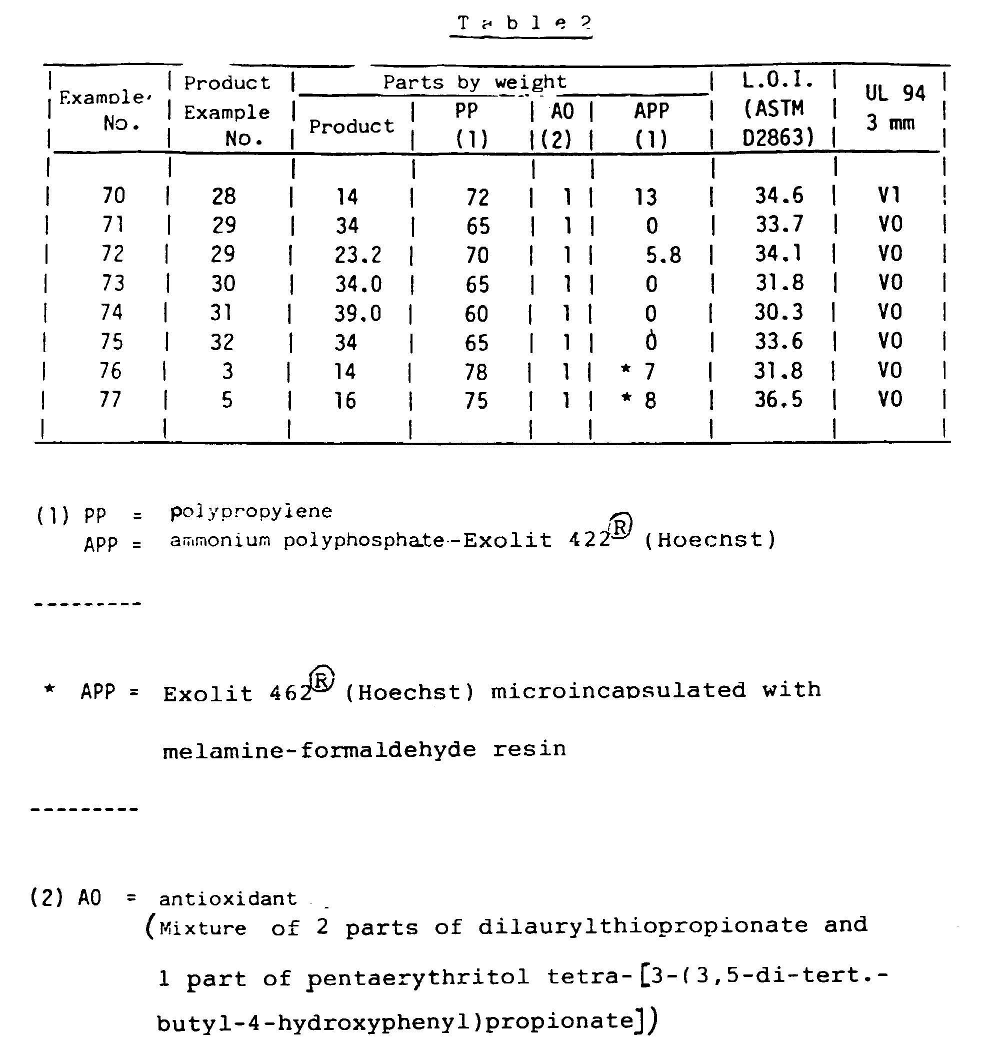

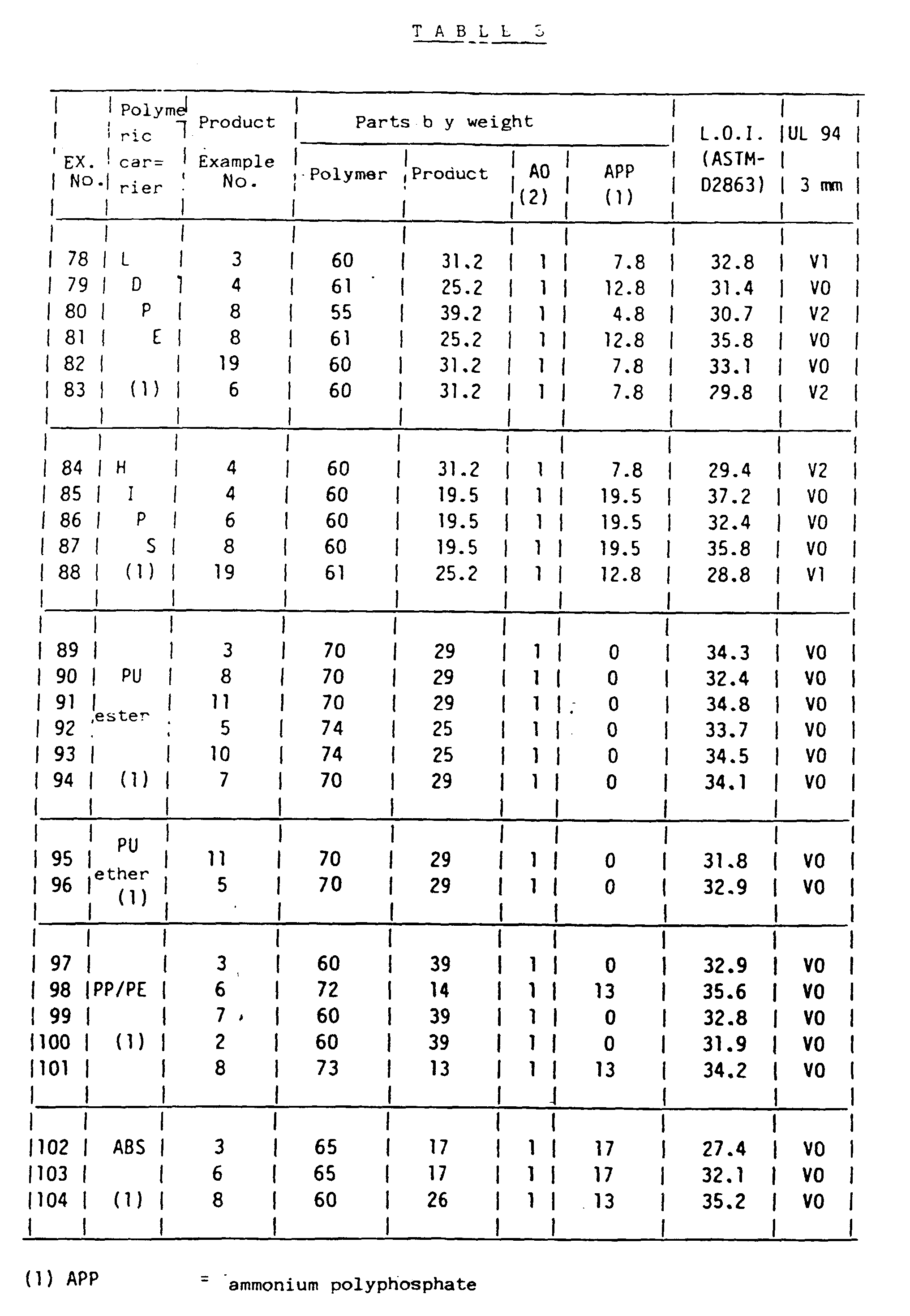

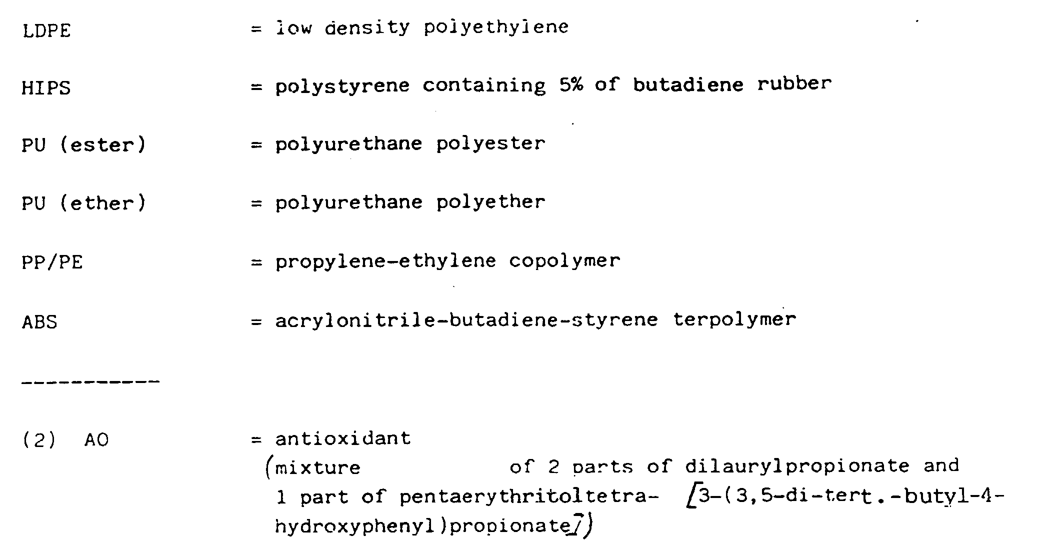

### EXAMPLE 105 (comparison example

By working according to the modalities used in examples 33 to 77, but using as nitrogen-containing compound the monophosphate (1:1) of 2,4,6-triamino-1,3,5-triazine, the following composition was prepared:

| | |
|---|---|
| Polypropylene | 65 parts by weight |
| Antioxidant | 1 part by weight |
| Phosphate (1:1) of the 2,4,6-triamino-1,3,5-triazine | 34 parts by weight |

By using the above composition specimens were prepared and subjected to self-estinguishing tests according to the modalities described above.

The following results were obtained:

| | |
|---|---|
| L.O.I. | 23.5 |
| UL 94 (3 mm) | class B (specimen burns) |

### EXAMPLE 106 (comparison example)

By working as in example 105, the following composition was prepared:

| | |
|---|---|
| Polypropylene | 73 parts by weight |
| Antioxidant | 1 part by weight |
| Ammonium polyphosphate | 13 parts by weight |
| Phosphate (1:1) of 2,4,6-triamino-1,3,5-triazine | 13 parts by weight |

By using the above composition specimens were prepared and subjected to self-estinguishing tests according to the modalities described above.

The following results were obtained:

| | |
|---|---|
| L.O.I. | 22.5 |
| UL 94 (3 mm) | class B (specimen burns). |

## Claims

1. Self-extinguishing polymeric compositions, comprising:
a) from 90 to 40 parts by weight of thermoplastic polymer and/or of polymer showing elastomeric properties;
b) from 10 to 60 parts by weight of one or more compounds derived from 2,4,6-triamino-1,3,5-triazine and salified with an oxygenated acid of phosphorus, said derivatives of 2,4,6-triamino-1,3,5-triazine having the general formula (I): 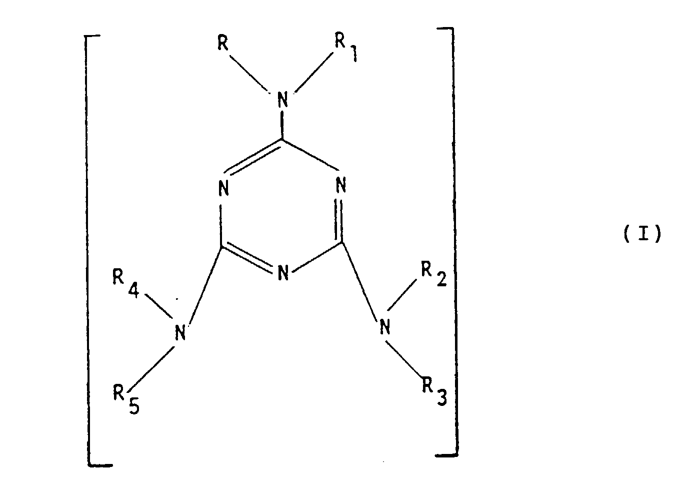
wherein at least one of the groups R and R₁ to R₅ is selected from
⁅CₘH₂ₘ⁆O-R₈
and 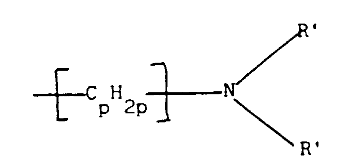 wherein
m = integer of from 2 to 8;
p = integer of from 2 to 6;
R₈ = H; (C₁-C₈) alkyl; (C₂-C₆) alkenyl; ⁅C_{q}H_{2q}⁆O-R_{9'}
q being an integer of from 1 to 4 and
R₉ being hydrogen or (C₁-C₄) alkyl; (C₆-C₁₂) cycloalkyl or (C₆-C₁₂) alkylcycloalkyl;
the groups R', the same or different from each other, are selected from H; (C₁-C₈) alkyl; (C₂-C₆) alkenyl;
(C₆-C₁₂) cycloalkyl or (C₆-C₁₂) alkylcycloalkyl; and (C₁-C₄) hydroxyalkyl;
or the moiety N(R')₂ is replaced by an N-heterocyclic radical which optionally contains another heteroatom and is bound to the alkyl chain through the nitrogen atom;
or in general formula (I) at least one of the groups NRR₁, NR₂R₃ and NR₄R₅ is replaced by an N-heterocyclic radical which optionally contains another heteroatom and is bound to the triazine ring through the nitrogen atom;
the remaining groups R and R₁ to R₅, the same or different from each other, have the meanings given above or are selected from H; (C₁-C₁₈) alkyl; (C₂-C₈)alkenyl; (C₆-C₁₆) cycloalkyl or (C₆-C₁₆) alkylcycloalkyl, optionally substituted by a hydroxy or (C₁-C₄) hydroxyalkyl group.

2. Compositions according to claim 1, wherein component (b) is selected from salts of general formula (II): 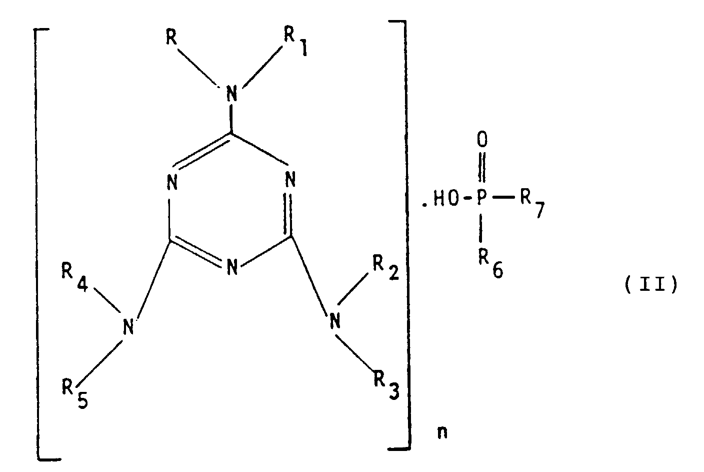 wherein the groups R and R₁ to R₅ have the meanings specified in claim 1 provided that, when the groups R' are H; (C₁-C₈) alkyl; (C₂-C₆) alkenyl; (C₆-C₁₂) cycloalkyl or (C₆-C₁₂) alkylcycloalkyl; or (C₁-C₄) hydroxyalkyl, the groups R₆ and R₇ described hereinafter are different from H and OH, respectively;
n is a number of up to 6;
R₆ is selected from H; OH; (C₁-C₈) alkoxy; aryloxy, optionally substituted by a (C₁-C₈) alkyl group; aralkyl, optionally substituted by a (C₁-C₄) alkyl group; (C₁-C₄) alkyl, optionally substituted by a carboxylic group; and aryl;
R₇ is selected from H; OH; (C₁-C₈) alkoxy; aryloxy; (C₁-C₄) alkyl; aryl; a group of formula 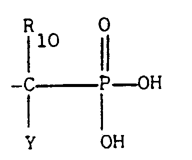
wherein R₁₀ is hydrogen or (C₁-C₁₂) alkyl and Y is OH or R₁₀;
a group of formula 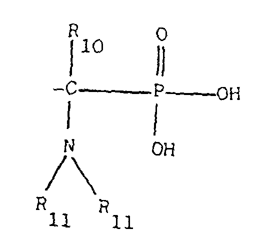 wherein R₁₀ is as defined above and the groups R₁₁,
the same or different from each other, represent hydrogen or (C₁-C₄) alkyl or the moiety N(R₁₁)₂ is replaced by an N-heterocyclic radical which optionally contains another heteroatom and is bound to the carbon atom through the nitrogen atom;
a group of formula 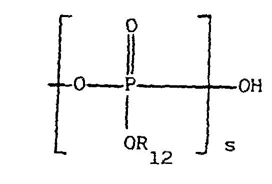 wherein R₁₂ is hydrogen or (C₁-C₈) alkyl and s is an integer of from 1 to 3;
a group of formula 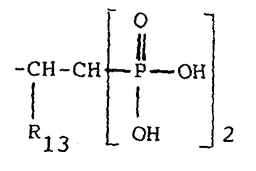 wherein R₁₃ is hydrogen or hydroxy;
a group of formula 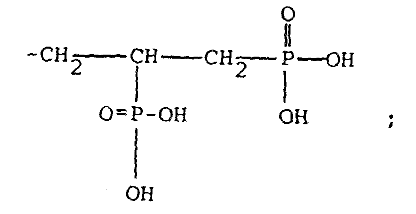 a group of formula 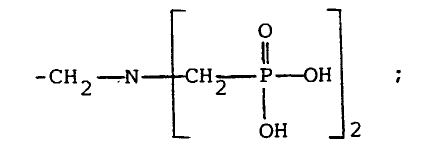 a group of formula 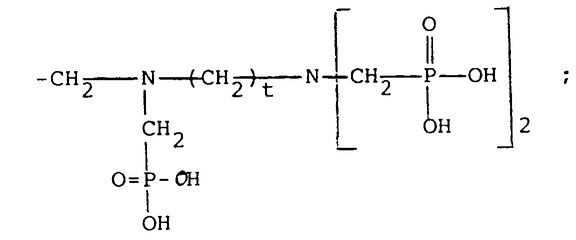 and a group of formula 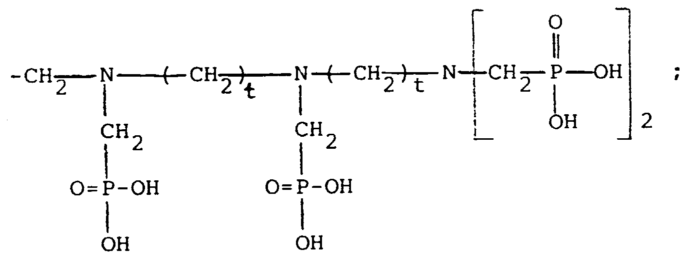 wherein t is an integer of from 2 to 6;
or R₆ and R₇ together form a cyclic structure of one of the following formulae:

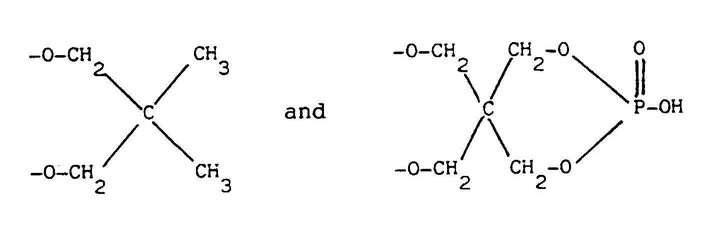

3. Compositions according to anyone of claims 1 and 2, wherein one or two of the moieties NRR₁, NR₂R₃ and NR₄R₅ in compounds of general formulae (I) and (II) represent NH₂ and/or at least one of said moieties represents a heterocyclic radical selected from aziridinyl; pyrrolidinyl; piperidinyl; morpholinyl; thiomorpholinyl; piperazinyl; 4-methylpiperazinyl; 4-ethylpiperazinyl; 2-methylpiperazinyl; 2,5-dimethylpiperazinyl; 2,3,5,6-tetramethylpiperazinyl; 2,2,5,5-tetramethylpiperazinyl; 2-ethylpiperazinyl; and 2,5-diethylpiperazinyl.

4. Compositions according to anyone of claims 1 to 3, wherein at least one of the groups R and R₁ to R₅ in general formula (I) is represented by
⁅CₘH₂ₘ⁆O-R₈
wherein:
m is an integer of from 2 to 4 and R₈ is H or (C₁-C₄) alkyl.

5. Composition according to anyone of claims 1 to 4, wherein the moiety N(R')₂ is a heterocyclic radical selected from aziridinyl; pyrrolidinyl; piperidinyl; morpholinyl; thiomorpholinyl; piperazinyl; 4-methylpiperazinyl; and 4-ethylpiperazinyl.

6. Compositions according to anyone of claims 2 to 5,
wherein the oxygenated acid of phosphorus according to general formula (II) is selected from hypophosphorous acid; phosphorous acid; phosphoric acid; pyrophosphoric acid; tripolyphosphoric acid; ethane-1,1,2-triphosphonic acid; 2-hydroxyethane-1,1,2-triphosphonic acid; propane-1,2,3-triphosphonic acid; isopropylphosphoric acid; n-butylphosphoric acid; n-butylphosphoric acid; di-n-butylphosphoric acid; di-isopropylphosphoric acid; di-n-pentylphosphoric acid; isooctylphosphoric acid; ethylphosphoric acid; hexylphosphoric acid; 2-ethylhexylphosphoric acid; methylphosphonic acid; ethylphosphonic acid; n-propylphosphonic acid; n-butylphosphonic acid; aminomethylphosphonic acid; phenylphosphoric acid; phenylphosphonic acid; phenylphosphinic acid; di-n-butylpyrophosphoric acid; di(2-ethylhexyl)pyrophosphoric acid; octylphenylphosphoric acid; 2-methylbenzylphosphonic acid; 1-aminoethane-1,1-diphosphonic acid; 1-hydroxyethane-1,1-diphosphonic acid; 1-hydroxydodecane-1,1-diphosphonic acid; 1-(N-methylamino)ethane-1,1-diphosphonic acid; N,N-dimethylaminomethane-1,1-diphosphonic acid; N-butylaminomethane-1,1-diphosphonic acid; phosphonoacetic acid; 2-phosphonopropionic acid; 3-phosphonopropionic acid; 2-phosphonobutyric acid; 4-phosphonobutyric acid; 2-hydroxy-5,5-dimethyl-2-oxo-1,3,2-dioxophosphorinane; 3,9-dihydroxy-2,4,8,10-tetroxo-3,9-diphosphaspiro[5.5] undecane-3,9-dioxide; amino-tris(methylenephosphonic) acid; ethylenediaminotetra(methylenephosphonic) acid; hexamethylenediaminotetra (methylenephosphonic) acid; and diethylenetriaminopenta (methylenephosphonic) acid.

7. Self-extinguishing polymeric compositions, comprising
(i) from 90 to 40 parts of weight of component (a) as defined in claim 1;
(ii) from 9 to 35 parts by weight of component (b) as defined in anyone of claims 1 to 6; and in addition to component (b)
(iii) from 1 to 25 parts by weight of one or more compounds selected from ammonium and amine phosphates (c).

8. Self-extinguishing polymeric compositions according to claim 7, wherein the ammonium phosphates (c) have the general formula (NH₄)ₙ₊₂PₙO₃ₙ₊₁ wherein n is an integer of at least 2; and/or wherein said phosphates (c) have the general formula (NH₄PO₃)ₙ wherein n ranges from 50 to 500.

9. Compositions according to anyone of claims 7 and 8, wherein the amine or ammonium phosphates (c) are selected from dimethylammonium phosphate, diethylammonium phosphate; ethylenediamine phosphate; melamine orthophosphate and melamine pyrophosphate.

10. Compositions according to any of claims 1 to 9, wherein the polymer (a) is selected from acrylonitrile/butadiene/styrene terpolymers; styrene/acrylonitrile copolymers; polyurethanes; poly(ethylene terephthalate); poly(butylene terephthalate), polyamides; and polymers and copolymers of olefins of general formula
R'' - CH = CH₂
wherein R'' is a hydrogen atom or a (C₁₋₈)-alkyl or (C₆₋₁₀)-aryl radical,
particularly:
(1) isotactic or prevailingly isotactic polypropylene;
(2) HDPE, LLDPE and LDPE polyethylene;
(3) crystalline copolymers of propylene and minor amounts of ethylene and/or other alpha-olefins, such as, e.g., 1-butene, 1-hexene, 1-octene and 4-methyl-1-pentene;
(4) heterophasic compositions comprising (A) a fraction constituted by a propylene homopolymer or one of the copolymers specified under item (3) above; and (B) a copolymeric fraction constituted by elastomeric copolymers of ethylene and an alpha-olefin, optionally containing minor amounts of diene, wherein the alpha-olefin is preferably selected from propylene and 1-butene; and
(5) elastomeric copolymers of ethylene and alpha-olefin(s), optionally containing minor amounts of diene.

11. Moulded articles obtained from the compositions according to any one of the preceding claims.

## Patentansprüche

1. Selbstverlöschende polymere Zusammensetzungen, die umfassen:
a) von 90 bis 40 Gew.-Teile eines thermoplastischen Polymers und/oder eines Polymers mit elastomeren Eigenschaften;
b) von 10 bis 60 Gew.-Teile einer oder mehrerer Verbindungen, die sich von 2,4,6-Triamino-1,3,5-triazin ableiten, das mit einer Sauerstoff-haltigen Säure des Phosphors ein Salz gebildet hat, wobei das genannte Derivat von 2,4,6-Triamin-1,3,5-triazin die allgemeine Formel (I) aufweist: 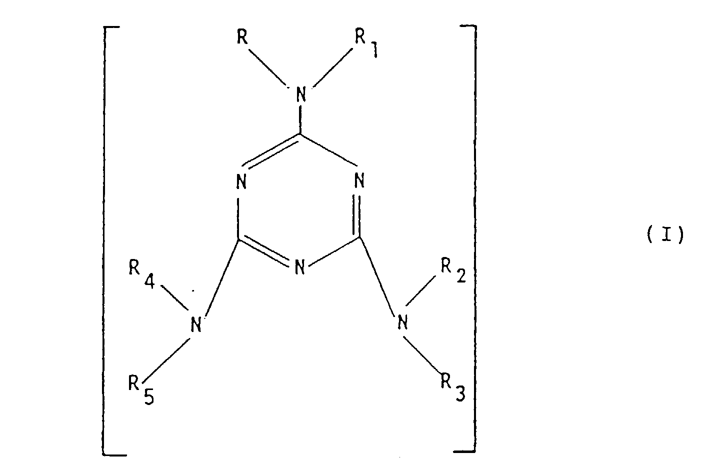
worin wenigstens eine der Gruppen R und R₁ bis R₅ ausgewählt werden aus
⁅CₘH₂ₘ⁆O-R₈
und 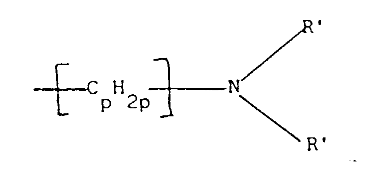 worin
m = eine ganze Zahl von 2 bis 8 darstellt;
p = eine ganze Zahl von 2 bis 6 bedeutet:
R₈ = H; (C₁-C₈)-Alkyl; (C₂-C₆)-Alkenyl, ⁅C_{q}H_{2q}⁆O-R_{9'} ist,
wobei q eine ganze Zahl von 1 bis 4 bedeutet und
R₉ = Wasserstoff oder (C₁-C₄) -Alkyl; (C₆-C₁₂)-Cycloalkyl oder (C₆-C₁₂)-Alkylcycloalkyl bedeutet;
die Gruppen R', die gleich oder verschieden sein können, ausgewählt werden aus: H; (C₁-C₈)-Alkyl; (C₂-C₆)-Alkenyl; (C₆-C₁₂)-Cycloalkyl oder (C₆-C₁₂)-Alkylcycloalkyl und (C₁-C₄)-Hydroxyalkyl;
oder die Einheit N(R')₂ ersetzt wird durch eine N-heterozyklische Gruppe, die gegebenenfalls ein weiteres Heteroatom enthält und über das Stickstoffatom an die Alkylkette gebunden ist;
oder wobei in der allgemeinen Formel (I) wenigstens eine der Gruppen NRR₁, NR₂R₃ und NR₄R₅ durch eine N-heterozyklische Gruppe ersetzt wird, die gegebenenfalls ein weiteres Heteroatom enthält und über das Stickstoffatom an den Triazinring gebunden ist;
die verbleibenden Gruppen R und R₁ bis R₅, die gleich oder verschieden sind, die obigen Bedeutungen haben oder ausgewählt werden aus H; (C₁-C₁₈)-Alkyl; (C₂-C₈) -Alkenyl; (C₆-C₁₆)-Cycloalkyl oder (C₆-C₁₆)-Alkylcycloalkyl, die gegebenenfalls durch eine Hydroxy- oder (C₁-C₄)-Hydroxyalkylgruppe substituiert sind.

2. Zusammensetzungen nach Anspruch 1, worin die Komponente (b) ausgewählt wird aus Salzen der allgemeinen Formel (II): 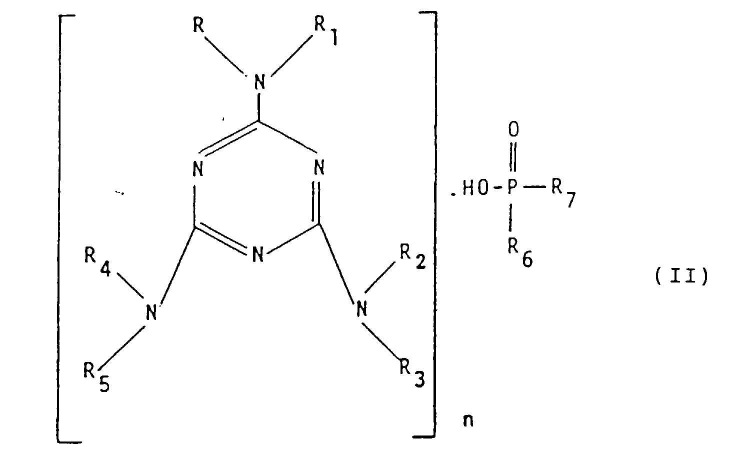 worin die Gruppen R und R₁ bis R₅ die in Anspruch 1 angegebenen Bedeutungen haben, unter der Voraussetzung, daß - wenn die Gruppen R' = H; (C₁-C₈)-Alkyl; (C₂-C₆)-Alkenyl; (C₆-C₁₂)-cycloalkyl oder (C₆-C₁₂)-Alkylcycloalkyl oder (C₁-C₄)-Hydroxyalkyl sind - die nachfolgenden Gruppen R₆ und R₇ sich von H bzw. OH unterscheiden.;
n = eine Zahl bis zu 6 ist;
R₆ ausgewählt wird aus H; OH; (C₁-C₈)-Alkoxy; Aryloxy, gegebenenfallls substituiert durch eine (C₁-C₈)-Alkygruppe; Aralkyl, gegebenenfalls substituiert durch eine (C₁-C₄) -Alkylgruppe; (C₁-C₄)-Alkyl, gegebenenfalls substituiert durch eine Carboxylgruppe; und Aryl;
R₇ ausgewählt wird aus H; OH; (C₁-C₈)-Alkoxy; Aryloxy; (C₁-C₄)-Alkyl; Aryl;, eine Gruppe der Formel 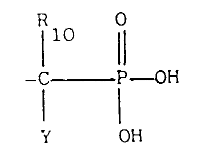
worin R₁₀ = Wasserstoff oder (C₁-C₁₂)-Alkyl ist und Y = OH oder R₁₀ bedeutet;
eine Gruppe der Formel 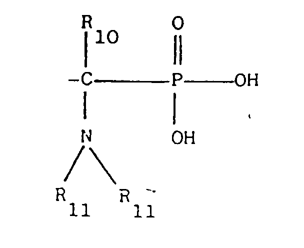 worin R₁₀ die oben definierte Bedeutung hat und die Gruppen R₁₁, die gleich oder verschieden sein können, Wasserstoff oder (C₁-C₄)-Alkyl bedeuten oder die Einheit N(R₁₁)₂ durch eine N-heterozyklische Gruppe ersetzt wird, die gegebenenfalls ein weiteres Heteroatom enthält und über das Stickstoffatom an das Kohlenstoffatom gebunden ist;
eine Gruppe der Formel 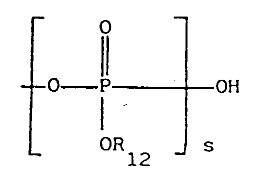 worin R₁₂ = Wasserstoff oder (C₁-C₈)-Alkyl ist und s eine ganze Zahl von 1 bis 3 bedeutet;
eine Gruppe der Formel 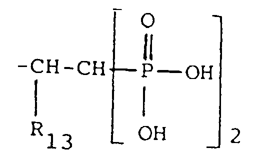 worin R₁₃ Wasserstoff oder Hydroxy ist;
eine Gruppe der Formel 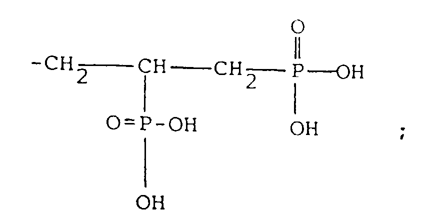 eine Gruppe der Formel 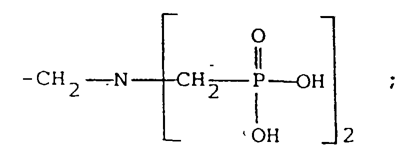 eine Gruppe der Formel 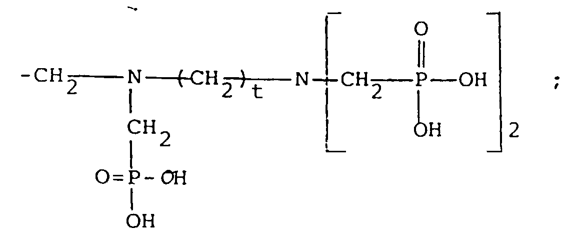 eine Gruppe der Formel 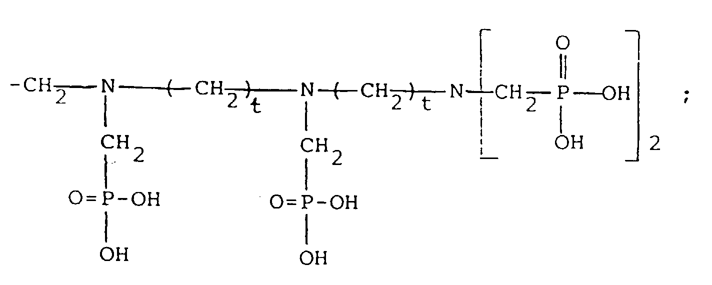 worin t eine ganze Zahl von 2 bis 6 ist;
oder R₆ und R₇ zusammen eine zyklische Struktur bilden mit einer der folgenden Formeln:

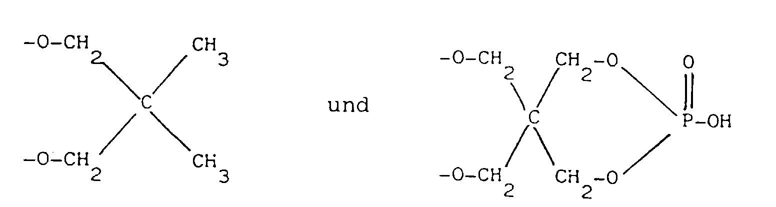

3. Zusammensetzungen nach einem der Ansprüche 1 und 2, wobei eine oder zwei der Einheiten NRR₁, NR₂R₃ und NR₄R₅ in den Verbindungen der allgemeinen Formeln (I) bzw. (II) NH₂ bedeuten und/oder wenigstens eine der genannten Einheiten eine heterozyklische Gruppe bedeutet, ausgewählt aus Aziridinyl, Pyrrolidinyl, Piperidinyl, Morpholinyl, Thiomorpholinyl, Piperazinyl, 4-Methylpiperazinyl, 4-Ethylpiperazinyl, 2-Methylpiperazinyl, 2,5-Dimethylpiperazinyl, 2,3,5,6-Tetramethylpiperazinyl, 2,2,5, 5-Tetramethylpiperazinyl, 2-Ethylpiperazinyl und 2,5-Diethylpiperazinyl.

4. Zusammensetzungen nach einem der Ansprüch 1 bis 3, wobei wenigstens eine der Gruppen R und R₁ bis R₅ in der allgemeinen Formel (I) dargestellt wird durch
⁅CₘH₂ₘ⁆O-R₈
worin:
m eine ganze Zahl von 2 bis 4 und R₈ = H oder (C₁-C₄)-Alkyl ist.

5. Zusammensetzungen nach einem der Ansprüch 1 bis 4, wobei die Einheit N(R')₂ eine heterozyklische Gruppe ist, ausgewählt aus: Aziridinyl, Pyrrolidinyl, Piperidinyl, Morpholinyl, Thiomorpholinyl, Piperazinyl, 4-Methylpiperazinyl und 4-Ethylpiperazinyl.

6. Zusammensetzungen nach einem der Ansprüch 2 bis 5, wobei die Sauerstoff-haltige Säure des Phosphor mit der allgemeinen Formel (II) ausgewählt wird aus: unterphosphorige Säure, Phosphorigsäure, Phosphorsäure, Pyrophosphorsäure, Tripolyphosphorsäure, Ethan-1,1,2-triphosphonsäure, 2-Hydroxyethan-1,1,2-triphosphonsäure, Propan-1,2,3-triphosphonsäure, Isopropylphosphorsäure, n-Butylphosphorsäure, n-Butylphosphorsäure, Di-n-butylphosphorsäure, Di-isopropylphosphorsäure, Di-n-pentylphosphorsäure, Isooctylphosphorsäure, Ethylphosphorsäure, Hexylphosphorsäure, 2-Ethylhexylphophorsäure, Methylphosphonsäure, Ethylphosphonsäure, n-Propylphosphonsäure, n-Butylphosphonsäure, Aminomethylphosphonsäure, Phenylphosphorsäure, Phenylphosphonsäure, Phenylphosphinsäure, Di-n-Butylpyrophosphorsäure,Di-(2-ethylhexyl)pyrophosphorsäure, Octylphenylphosphorsäure, 2-Methylbenzylphosphonsäure, 1-Aminoethan-1,1-diphosphonsäure, 1-Hydroxyethan-1,1-diphosphonsäure, 1-Hydroxydodecan-1,1-diphosphonsäure, 1-(N-Methylamino)ethan-1,1-diphosphonsäure, N,N'-Dimethylaminomethan-1,1-diphosphonsäure, N-Butylaminomethan-1,1-diphosphonsäure, Phosphonessigsäure, 2-Phosphonpropionsäure, 3-Phosphonpropionsäure, 2-Phosphonbuttersäure, 4-Phosphonbuttersäure, 2-Hydroxy-5,5-dimethyl-2-oxo-1,3,2-dioxophosphorinan, 3,9-Dihydroxy-2,4,8,10-tetroxo-3,9-diphosphaspiro[5.5]undecan-3,9-dioxid, Amino-tris(methylenphosphon)säure, Ethylendiaminotetra(methylenphosphon)säure, Hexamethylendiaminotetra(methylenphosphon)säure und Diethylentriaminopenta(methylenphosphon)säure.

7. Selbstverlöschende polymere Zusammensetzungen, die umfassen:
(i) 90 bis 40 Gew.-Teile der Komponente (a) wie in Anspruch 1 definiert;
(ii) 9 bis 35 Gew.-Teile der Komponente (b) wie in jedem beliebigen der Ansprüche 1 bis 6 definiert;
und zusätzlich zu der Komponente (b)
(iii) 1 bis 25 Gew.-Teile einer oder mehrerer Verbindungen, ausgewählt aus Ammonium- und Aminphosphaten (c) .

8. Selbstverlöschende polymere Zusammensetzungen nach Anspruch 7, wobei die Ammoniumphosphate (c) die allgemeine Formel (NH₄)ₙ₊₂PₙO₃ₙ₊₁ haben, worin n eine ganze Zahl von wenigstens 2 bedeutet und/oder worin die genannten Phosphate (c) die allgemeine Formel (NH₄PO₃)ₙ aufweisen, worin n im Bereich von 50 bis 500 liegt.

9. Zusammensetzungen nach einem der Ansprüche 7 oder 8, wobei die Amin- oder Ammoniumphosphate (c) ausgewählt werden aus: Dimethylammoniumphosphat, Diethylammoniumphosphat, Ethylendiaminphosphat, Melaminorthophosphat und Melaminpyrophosphat.

10. Zusammensetzungen nach einem der Ansprüche 1 bis 9, wobei das Polymer (a) ausgewählt wird aus: Acrylnitril/Butadien/Styrol-Terpolymeren;Styrol/Acrylnitril-Copolymeren; Polyurethanen; Poly(ethylenterephthalat); Poly(butylenterephthalat); Polyamiden und Polymeren und Copolymeren von Olefinen der allgemeinen Formel
R" - CH = CH₂
worin R" ein Wasserstoffatom oder eine (C₁₋₈)-Alkyl- oder (C₆₋₁₀)-Arylgruppe bedeutet,
insbesondere:
(1) isotaktischem oder vorwiegend isotaktischem Polypropylen;
(2) HDPE, LLDPE und LDPE Polyethylen;
(3) kristallinen Copolymeren von Propylen und kleinen Mengen Ethylen und/oder anderen α-Olefinen wie z. B. 1-Buten, 1-Hexen, 1-Octen und 4-Methyl-1-penten;
(4) Zusammensetzungen mit Heterophasen, die umfassen: (A) eine Fraktion, zusammengesetzt aus einem Propylen-Homopolymer oder einem der Copolymere, wie sie oben unter (3) genannt wurden; und (B) eine copolymere Fraktion, zusammengesetzt aus elastomeren Copolymeren von Ethylen und einem α-Olefin, gegebenenfalls mit kleinen Mengen an Dien, worin das α-Olefin vorzugsweise ausgewählt ist aus Propylen und 1-Buten; und
(5) elastomeren Copolymeren von Ethylen und α-Olefin(en), gegebenenfalls mit kleinen Mengen an Dien.

11. Formkörper, hergestellt aus den Zusammensetzungen nach jedem beliebigen der vorhergehenden Ansprüche.

## Revendications

1. Compositions polymères auto-extinctrices, comprenant :
(a) de 90 à 40 parties en poids de polymère thermoplastique et/ou de polymère ayant des propriétés d'élastomères ;
(b) de 10 à 60 parties en poids d'un ou plusieurs des composés dérivés du 2,4,6-triamino-1,3,5-triazine et salifié avec un acide oxygéné de phosphore, lesdits dérivés du 2,4,6-triamino-1,3,5-triazine correspondant à la formule (I) : 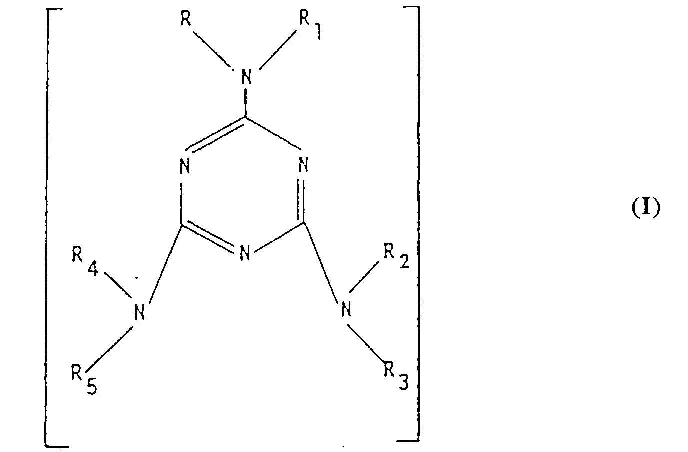 dans laquelle au moins un des groupes R et R₁ à R₅ est choisi parmi
-[CₘH₂ₘ]-O-R₈
et 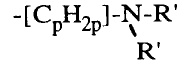 dans lesquelles
m = nombre entier compris entre 2 et 8 ;
p = nombre entier compris entre 2 et 6 ;
R₈ = H, alkyl en (C₁-C₈), alcényl en (C₂-C₆), -[C_{q}H_{2q}]-O-R₉,
q étant un nombre entier compris entre 1 et 4, et
R₉ représentant un atome d'hydrogène, ou un radical alkyle en (C₁-C₄), cycloalkyle en (C₆-C₁₂) ou alkylcycloalkyle en (C₆-C₁₂) ;
les groupes R', identiques ou différents l'un de l'autre, sont choisis parmi un atome d'hydrogène, les radicaux alkyle en (C₁-C₈), alcényle en (C₂-C₆), cycloalkyle en (C₆-C₁₂) ou alkylcycloalkyle en (C₆-C₁₂), et hydroxyalkyle en (C₁-C₄) ;
ou la partie N(R')₂ est remplacée par un radical N-hétérocyclique, qui contient éventuellement un autre hétéroatome, et qui est relié à la chaîne alkyle par l'atome d'azote ;
ou dans la formule générale (I) au moins un des groupes NRR₁, NR₂R₃ et NR₄R₅ est remplacé par un radical N-hétérocyclique qui contient éventuellement un autre hétéroatome, et qui est relié au cycle de triazine par l'atome d'azote ;
les groupes restants R et R₁ à R₅, identiques ou différents les uns des autres, ont les définitions indiquées précédemment ou sont choisis parmi un atome d'hydrogène; les radicaux alkyle en (C₁-C₁₈); alcényle en (C₂-C₈); cycloalkyle en (C₆-C₁₆) ou alkylcycloalkyle en (C₆-C₁₆), éventuellement substitué par un groupe hydroxy ou hydroxyalkyle en (C₁-C₄).

2. Compositions conformes à la revendication 1, dans lesquelles un composant (b) est choisi parmi des sels de formule générale (II) : 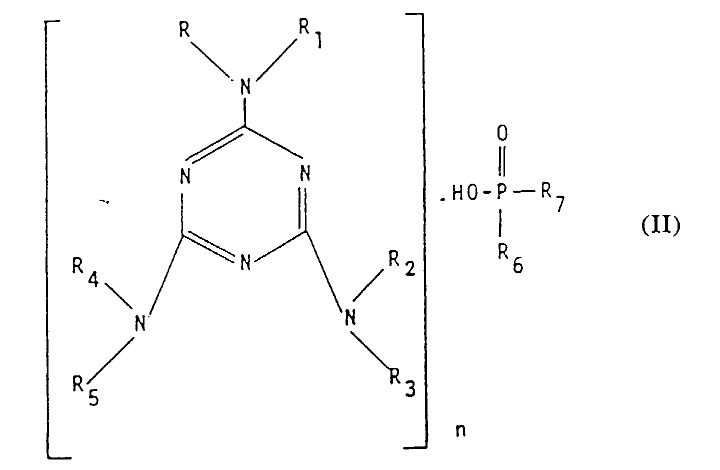 dans laquelle les groupes R et R₁ à R₅ ont les définitions indiquées dans la revendication 1, pourvu que, quand les groupes R' représentent un atome d'hydrogène, les radicaux alkyle en (C₁-C₈), alcényle en (C₂-C₆), cycloalkyle en (C₆-C₁₂) ou alkylcycloalkyle en (C₆-C₁₂), ou hydroxyalkyle en (C₁-C₄ ), les groupes R₆ et R₇ décrits dans la suite du présent document sont respectivement différents de H et OH ;
n est un nombre allant jusqu'à 6 ;
R₆ est choisi parmi H, OH, les radicaux alcoxy en (C₁-C₈), aryloxy éventuellement substitué par un groupe alkyle en (C₁-C₈), aralkyle éventuellement substitué par un groupe alkyle en (C₁-C₄), alkyle en (C₁-C₄) éventuellement substitué par un groupe carboxylique, et aryle ;
R₇ est choisi parmi H, OH, les radicaux alcoxy en (C₁-C₈), aryloxy, alkyle en (C₁-C₄), aryle, un groupe de formule 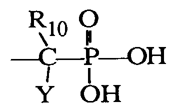
dans laquelle R₁₀ représente un atome d'hydrogène ou un radical alkyle en (C₁-C₁₂), et Y représente OH ou R₁₀ ;
un groupe de formule 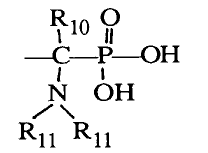 dans laquelle R₁₀ a la définition indiquée précédemment et les groupes R₁₁, identiques ou différents l'un de l'autre, représentent un atome d'hydrogène ou un radical alkyle en (C₁-C₄), ou la partie N(R₁₁)₂ est remplacée par un radical N-hétérocyclique qui contient éventuellement un autre hétéroatome et qui est relié à l'atome de carbone par l'atome d'azote ; un groupe de formule 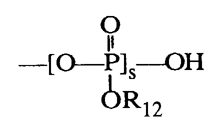 dans laquelle R₁₂ représente un atome d'hydrogène ou un radical alkyle en (C₁-C₈), et s est un nombre entier de 1 à 3 ;
un groupe de formule 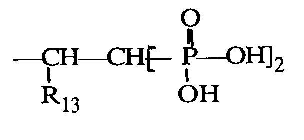 dans laquelle R₁₃ représente un atome d'hydrogène ou un radical hydroxy
un groupe de formule 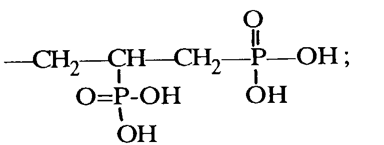 un groupe de formule 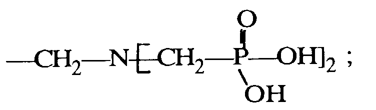 un groupe de formule 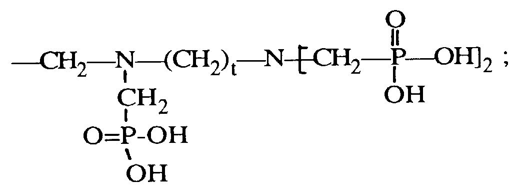 et un groupe de formule 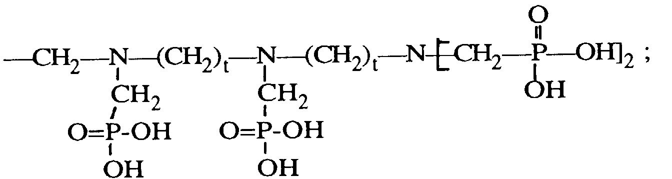 dans laquelle t est un nombre entier compris entre 2 et 6 ;
ou R₆ et R₇ forment ensemble une structure cyclique correspondant à l'une des formules suivantes :

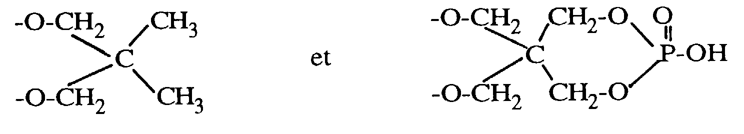

3. Compositions conformes à l'une quelconque des revendications 1 et 2, dans lesquelles une ou deux des parties NRR₁, NR₂R₃ et NR₄R₅ dans les composés de formules générales (I) et (II) représentent NH₂et/ou au moins une desdites parties représente un radical hétérocyclique choisi parmi les radicaux aziridinyle, pyrrolidinyle, pipéridinyle, morpholinyle, thiomorpholinyle, pipérazinyle, 4-méthylpipérazinyle, 4-éthylpipérazinyle, 2-méthylpipérazinyle, 2,5-diméthylpipérazinyle, 2,3,5,6-tétraméthylpipérazinyle, 2,2,5,5-tétraméthylpipérazinyle, 2-éthylpipérazinyle, et 2,5-diéthylpipérazinyle.

4. Compositions conformes à l'une quelconque des revendications 1 à 3, dans lesquelles au moins un des groupes R et R₁ à R₅ dans la formule générale (I) est représenté par
-[CₘH₂ₘ]-O-R₈
dans laquelle m est un nombre entier compris entre 2 et 4, et R₈ représente H ou un radical alkyle en (C₁-C₄).

5. Composition conforme à l'une quelconque des revendications 1 à 4, dans laquelle la partie N(R')₂ représente un radical hétérocyclique choisi parmi les radicaux aziridinyle, pyrrolidinyle, pipéridinyle, morpholinyle, thiomorpholinyle, pipérazinyle, 4-méthylpipérazinyle, et 4-éthylpipérazinyle.

6. Compositions conformes à l'une quelconque des revendications 2 à 5, dans lesquelles l'acide oxygéné de phosphore d'après la formule générale (II), est choisi parmi les acide hypophosphoreux, acide phosphoreux, acide phosphorique, acide pyrophosphorique, acide tripolyphosphorique, acide éthane-1,1,2-triphosphonique, acide 2-hydroxyéthane-1,1,2-triphosphonique, acide propane-1,2,3-triphosphonique, acide isopropylphosphorique, acide n-butylphosphorique, acide di-n-butylphosphorique, acide di-isopropylphosphorique, acide di-n-pentylphosphorique, acide isooctylphosphorique, acide éthylphosphorique, acide hexylphosphorique, acide 2-éthylhexylphosphorique, acide méthylphosphonique, acide éthylphosphonique, acide n-propylphosphonique, acide n-butylphosphonique, acide aminométhylphosphonique, acide phénylphosphorique, acide phénylphosphonique, acide phénylphosphinique, acide di-n-butylpyrophosphorique, acide di(2-éthylhexyl)pyrophosphorique, acide octylphénylphosphorique, acide 2-méthylbenzylphosphonique, acide 1-aminoéthane-1,1-diphosphonique, acide 1-hydroxyéthane-1,1-diphosphonique, acide 1-hydroxydodécane-1,1-diphosphonique, acide 1-(N-méthylamino)éthane-1,1-diphosphonique, acide N,N-diméthylaminométhane-1,1-diphosphonique, acide N-butylaminométhane-1,1-diphosphonique, acide phosphonoacétique, acide 2-phosphonopropionique, acide 3-phosphonopropionique, acide 2-phosphonobutyrique, acide 4-phosphonobutyrique, acide 2-hydroxy-5,5-diméthyl-2-oxo-1,3,2-dioxophonnane, 3,9-dihydroxy-2,4,8,10-tétroxo-3,9-diphosphaspiro[5.5]undécane-3,9-dioxyde, acide amino-tris(méthylène-phosphonique), acide éthylènediaminotétra(méthylènephosphonique), acide hexaméthylènediaminotétra(méthylènephosphonique), acide diéthylènetriaminopenta(méthylènephosphonique).

7. Compositions polymères auto-extinctrices, comprenant
(i) de 90 à 40 parties en poids de composant (a) qui est défini dans la revendication 1,
(ii) de 9 à 35 parties en poids de composant (b) qui est défini dans l'une quelconque des revendications 1 à 6, et en plus du composant (b),
(iii) de 1 à 25 parties en poids de l'un ou plusieurs des composants choisis parmi les phosphates d'ammonium et d'amine (c).

8. Compositions polymères auto-extinctrices conformes à la revendication 7, dans lesquelles les phosphates d'ammonium (c) ont la formule générale (NH₄)ₙ₊₂PₙO₃ₙ₊₁ dans laquelle n est un nombre entier valant au moins 2 ; et/ou dans lesquelles lesdits phosphates (c) ont la formule générale (NH₄PO₃)ₙ dans laquelle n se situe dans l'intervalle allant de 50 à 500.

9. Compositions conformes à l'une quelconque des revendications 7 et 8, dans lesquelles les phosphates d'ammonium ou d'amine (c) sont choisis parmi les phosphate de diméthylammonium, phosphate de diéthylammonium, phosphate d'éthylènediamine, orthophosphate de mélamine, et pyrophosphate de mélamine.

10. Compositions conformes à l'une quelconque des revendications 1 à 9, dans lesquelles le polymère (a) est choisi parmi des terpolymères acrylonitrile/butadiène/styrène, copolymères styrène/acrylonitrile, polyuréthannes, poly(éthylène téréphtalate), poly(butylène téréphtalate), polyamides et, polymères et copolymères d'oléfines de formule générale
R" - CH = CH₂
dans laquelle R" représente un atome d'hydrogène ou un radical alkyle en (C₁₋₈) ou aryle en (C₆₋₁₀)
en particulier :
(1) un polypropylène isotactique ou à dominante isotactique ;
(2) des polyéthylènes HDPE, LLDPE et LDPE ;
(3) des copolymères cristallins de propylène et de faibles quantités d'éthylène et/ou autres alpha-oléfines comme, par exemple, les 1-butène, 1-héxène, 1-octène, 4-méthyl-1-pentène ;
(4) des compositions hétérophases comprenant (A) une fraction constituée par un homopolymère de propylène ou un des copolymères désignés sous le numéro précédent (3) ; et (B) une fraction copolymère constituée par des copolymères élastomères d'éthylène et d'une alpha-oléfine, contenant éventuellement de faibles quantités de diène, dans laquelle l'alpha-oléfine est de préférence choisi parmi les propylène et 1-butène ; et
(5) des copolymères élastomères d'éthylène et d'alpha-oléfine(s), contenant éventuellement de faibles quantités de diène.

11. Articles moulés obtenus à partir des compositions conformes à l'une quelconque des précédentes revendications.
